# EUROPEAN PATENT APPLICATION

(11) **EP 0 869 434 A2**
(43) Date of publication of application: **07.10.1998**
(21) Application number: 98302523.0
(22) Date of filing: 31.03.1998
(51) Int. Cl.: G06F 11/00

(54) **Method for outputting trace information of a microprocessor**

(30) Priority: 31.03.1997 JP 79719/97; 02.07.1997 JP 176801/97
(71) Applicant: Hewlett-Packard Company, Palo Alto, California 94304 (US)
(72) Inventor: Yano, Tatsuo, Kobe-shi, Hyogo (JP); Nakamura, Nobuyuki, Kobe-shi, Hyogo (JP)
(74) Representative: Powell, Stephen David

(57) **Abstract**

This invention reduces the possibility of causing waits due to outputting trace information in a microprocessor and outputs trace information such as execution address, data, processor status. Trace information is output in a variable length packet format. Because this makes it possible to complete sending one unit of trace information in a shorter time on the average than the conventional practice, the probability that trace information overruns occur during a real-time trace is reduced.

## Description

### FIELD OF THE INVENTION

The present invention relates to a method of outputting trace information for debugging a microcomputer application system. In particular, it relates to a method of outputting trace information for a microprocessor which incorporates the function of outputting trace information which provides its operating status.

### BACKGROUND OF THE INVENTION

In debugging of a microprocessor application system, it is very important to acquire trace information, i.e. a series of information such as addresses, data, and other types of processor status, while a program is being executed. When acquiring trace information, it is very important not to affect the operation of the microprocessor and specifically not to slow its operating speed by, for example, inserting extra waits into microprocessor operations (real-time trace). Therefore, since the increasing operating speed of microprocessors makes it difficult to use methods such as connecting external circuits to acquire trace information when debugging, proposals have been made to incorporate the function of outputting trace information into microprocessors. Conventional examples of microprocessors with a built-in real-time trace function will be explained hereinafter.

### PIN STRUCTURE AND OUTPUT METHOD

Conventionally, the pins which output traces consist of one clock signal pin, several status signal pins, and several data signal pins. The function of each of these signal pins in this case is as follows.

Clock signal pin: same frequency as the core clock of the processor, and the reference clock signal for trace output.

Status signal pins: Synchronized with the clock signal pin, and displaying processor status, such as instruction execution status, exception generation, the occurrence of branches due to branch instruction execution, etc.

Data signal pins: Synchronized with the clock signal pin and displaying branch target addresses when exceptions or branches occur. In order to indicate when branch target address output spans more than one clock, the status signal pins indicate the start of data (i.e. branch target address) output as well as processor status.

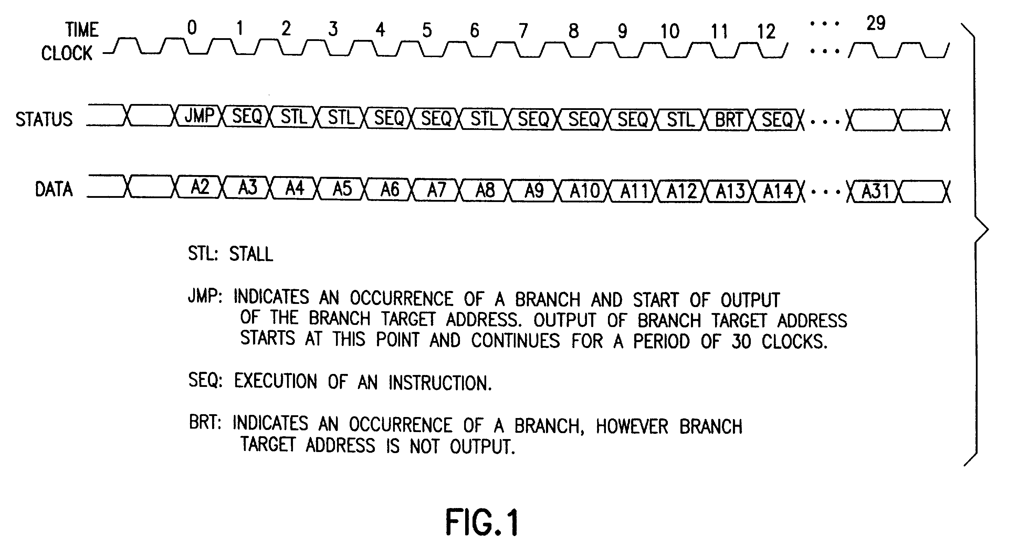

FIG. 1 shows an example of trace output for a processor with a 32-bit address space and 32-bit fixed length instructions. The status "JMP" is output to show that a branch occurred and that the branch target address is being output because of a branch at time 0, and output of the branch target address starts using the data output line. Because, when this happens, the least significant two bits (A0, A1) of the program counter (PC) are always fixed at 0, so these two bits are not output; the bits starting with A2 are sequentially output toward the high-order side.

Furthermore, details regarding this sort of trace information output method can be found in Japanese Laid-open Patent Heisei 8-185336, for example.

In this method the number of status signal pins and the displayed processor statuses and the values corresponding to these statuses are different for each processor or for each processor core architecture. The number and significance of status signal pins displaying data output start point and the number of clocks performing output also vary according to the type of microprocessor.

### TRACING THE SEQUENCE OF THE PROGRAM COUNTER

In order to trace the sequence of the program counter, it is necessary to be able to use trace information output from a debugging module to judge the address at which a branch or exception occurred (the branch origin address) and which address is being branched to (the branch target address).

Next we will explain how the branch origin address and the branch target address are output in this conventional technique.

### BRANCH POINT ADDRESS

The branch origin address when a branch or exception occurs can be obtained by adding the PC increment until the next branch occurs to the previous branch or exception branch target address. Therefore, conventionally, as described above, the status signal shows for each processor core clock whether or not an instruction was executed, and whether or not a branch occurred, and whether or not an exception occurred. The branch origin address can be calculated by tracing and collecting all of the statuses output during the interval from the branch or exception until the next branch occurred and indicating whether or not an instruction was executed.

In the previously described example, the branch instruction address is found by multiplying by 4 the number of "SEQs" output until status "BRT" and adding this value to the branch target address "A" of "JMP". Furthermore, the SEQ immediately after JMP is the delayed branch slot instruction so it is not counted.

### BRANCH TARGET ADDRESS

The number of bits output for branch target address when a branch or exception occurs is fixed or a previously set number of bits.

FIG. 1 shows an example in which the number of bits output for a branch target address is fixed.

On the other hand, to give an example in which a previously set number of bits is output, first, the number of bits in the branch target address output when the branch occurred is set by a register, and then tracing begins. For example, in the case of a processor which has a 32-bit address space, the bit length of the branch target address is a total of 32 bits, and is selected starting with the lower significant 16 bits, etc., and this is preset in the register.

The following example of Outputting Preset Number of Bits is an example which shows outputting only the lower significant 16 bits of the branch target address when the branch occurred.

### Example of Outputting Preset Number of Bits

Status: X_$5_X_$9_X_$0_X_tgt_X
Data: X_$0_X_$0_X_3:0_X_7:4_X_11:8_X15:12_X

In this,

PST: $5: Indicates that a branch occurred due to a branch instruction.

$9: Indicates the start of outputting 16-bit data (in this example, the lower significant 16 bits of the branch target address).

$0: Stall

tgt: Indicates operation of branch target instruction. For example, it would be "$1" if the instruction were executed.

### DATA TRACE

Data trace is performed by inserting special instructions to output data to trace output pins into the debugging program.

### PROBLEMS THE INVENTION IS TO SOLVE

### CORE CLOCK ACCELERATION

Though the core clock frequencies of a processor have become higher, it has become difficult to make the frequency at which external input and output can be performed correspondingly high. Thus, a method to improve processor performance is often used in which a processor operates internally at a high frequency and the external input and output pins are operated at a lower operating frequency. Therefore, when the conventional methods in which outputting is required to operate at the same frequency as the core clock frequency of the processor are applied to this sort of processors, it is not possible to do real-time or nearly real-time tracing unless many wait cycles are inserted internal to the processor.

### AN OUTPUT SYSTEM THAT DOES NOT DEPEND ON THE PROCESSOR

Even if it is possible to output trace information at the same frequency as the core clock frequency of a processor, when a new processor is added to a processor family, the new processor receives a modification, such as an expansion in its functionality in which two or more instructions are issued at the same time, new states should be added or modified. In cases such as this, or in cases where a new processor family is to be supported, it is necessary to design new debugging tools (hardware, software), which makes the tool development inefficient.

### MAKING PIN STRUCTURE EFFICIENT, AND FREEING UP PINS

Furthermore, because in conventional methods the number of pins assigned to trace information output is large, such as 4 or 8 pins for status signal pins and data signal pins in total and furthermore the number of these pins is fixed, the total number of pins of the chip and the package size are restricted.

### ELIMINATION OF REDUNDANT DATA

Because a program has locality to some extent, the higher order bits of a branch target address of an exception or branch are often not different from those of the most recently obtained address information such as the previous branch target address, etc. In the conventional methods, however, when the branch target address is output, the entire address or a preset number of bits starting from the lower significant bits are simply output. When the entire branch target address is output, redundant (unnecessary) data is also output if the higher significant bits have not changed. When outputting a preset number of bits starting from the lower significant bits, it is not possible to identify the higher order bits in the case of the branch in which the higher order bits changes.

### SUMMARY OF THE INVENTION

In order to solve the defects described above, the object of the present invention is to provide a method for outputting trace information of a microprocessor, which method makes it possible to perform the output in an output format that is not dependent of the architecture of the processor and at a frequency which is not dependent on the operating frequency of the processor core, which method further makes it possible to perform the output using a minimum pin count, to provide freedom in the pin count, and to perform real-time tracing in many cases.

In the method for outputting trace information of a microprocessor of the present invention, the aforementioned objects are achieved by outputting trace information as a packet composed of a variable-length bit string with a microprocessor which can output trace information.

### BRIEF DESCRIPTION OF THE DRAWINGS

FIG. 1 is a drawing explaining prior art.

FIG. 2 is a block diagram of the hardware structure to which one embodiment of the present invention is applied.

FIG. 3 is a drawing explaining signal line timing when outputting packets.

FIG. 4 is a diagram showing an example of a circuit for writing to trace memory with a debugging tool.

FIG. 5 is a diagram showing another example of a circuit for writing to trace memory with a debugging tool.

FIG. 6 is a diagram showing the structure of the packet data register in FIG. 5.

FIG. 7 is a diagram showing still another example of a circuit for writing to trace memory with a debugging tool.

FIG. 8 is a diagram showing the structure of the branch target address register in FIG. 7.

FIG. 9 is a timing chart explaining the break output and the trigger output.

FIG. 10 is a timing chart explaining the break input and the trigger input.

FIG. 11 is a drawing showing the construction of the IDCODE register.

FIG. 12 is a drawing explaining the position at which the quick access mechanism can be inserted.

FIG. 13 is a timing chart showing the signals of the trace port.

FIG. 14 is a drawing explaining the method for shortening the trace packet bit length.

FIG. 15 is a drawing explaining the method for shortening the trace packet bit length.

FIG. 16 is a drawing explaining the method for shortening the trace packet bit length.

### EXPLANATION OF SYMBOLS

- 100:: Target system
- 101:: Microprocessor
- 103:: Memory
- 105:: I/O
- 107:: External bus
- 111:: Processor core
- 113:: Debugging module
- 115:: Internal processor bus
- 121:: Trace packet generation unit
- 123:: Instruction/data access detection unit
- 200:: Debugging tool
- 201:: Trace storing circuit
- 203:: Communication interface
- 205:: Debugging control
- 300:: Host computer
- 301:: Debugger

### DETAILED DESCRIPTION OF THE INVENTION

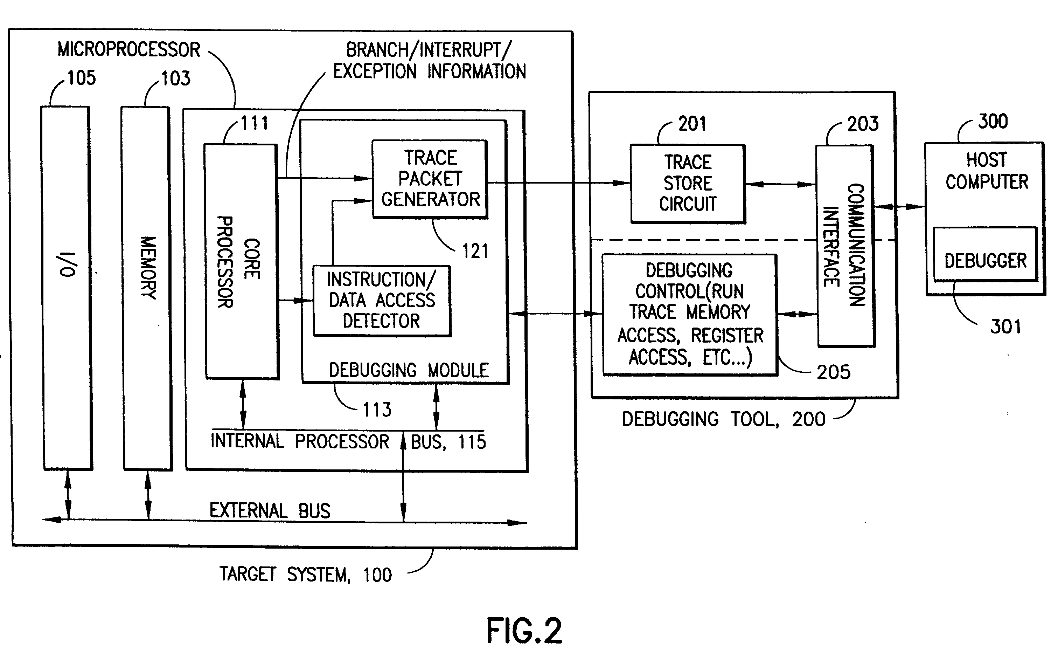

FIG. 2 is a block diagram of a hardware structure to which one embodiment of the present invention is applied. In FIG. 2, a target system 100, which is to be debugged, is provided with a microprocessor 101, a memory 103, and an input/output device (I/O) 105. Furthermore, it is of course possible to add other components as required. These main components are interconnected by an external bus 107.

In addition to a processor core 111 which performs the typical microprocessor operations, the microprocessor 101 is provided with an additional debugging module 113 to do a part of debugging operations within the microprocessor (in this case, especially to output trace information). The debugging module 113 is provided with a trace packet generation unit 121, which generates and outputs trace packets (to be described later) for outputting trace information to the outside. The trace packet generation unit 121 receives information regarding the occurrence of branches, interrupts, and exceptions from the processor core 111 and generates a trace packet. Through the instruction/data access detection unit, the trace packet generation unit 121 also obtains information if the address of the instruction executed by the microprocessor core 111 or its target address has matched the preset address or range of address and information regarding that address, and generates a trace packet.

Though the debugging module 113 also includes other components than these, explanation thereof will be omitted herein, since they are the same as in conventional logic analyzers or in-circuit emulators.

The packets generated by trace packet generation unit 121 of the debugging module 113 are output via a pin of the microprocessor 101 and supplied to a trace store circuit 201 inside a debugging tool 200, which externally connected to the target system 100, and the trace information obtained in this manner is stored in this circuit. A debugger 301 in a host computer 300 acquires and analyzes the trace information stored in the trace store circuit 201 via a communication interface 203 inside the debugging tool 200, LAN, or a dedicated connection line, etc. In return, via a debugging control 205, the debugger controls the microprocessor 113 for making it perform execution, tracing, memory access, register access, etc. Furthermore, in case where a logic analyzer is used for trace storing, etc., the trace storing part and the other parts can be in separate modules.

We will herein after explain in detail the output of trace information from a microprocessor with the configuration shown in FIG. 2.

### PROTOCOL SUMMARY

In the prior art, each processor status is represented by a fixed length bit string, and is displayed in one clock cycle by using a fixed number of status output lines and synchronized with the clock of the same frequency as the processor core clock. In contrast, the present invention represents each processor status as a variable length bit packet, and displays it in one or more clock cycles using a variable number of data output lines, synchronized with a clock for trace output. Furthermore, the clock for trace output can have a different frequency from the processor core clock.

### PIN ARRANGEMENT AND PACKET OUTPUT METHOD

The signal lines which output variable length bit packets consist of three types of signal lines, as described below:
a) One clock output line
b) One or more data output lines
c) One status output line

A packet is divided into bit strings each of which is of the length of the number of the data output lines, and sequentially output from LSB onto the data output lines, synchronized with changes in the clock output line signal. Therefore a packet sometimes extends across more than one clock, so the status output line provides a packet delimiter.

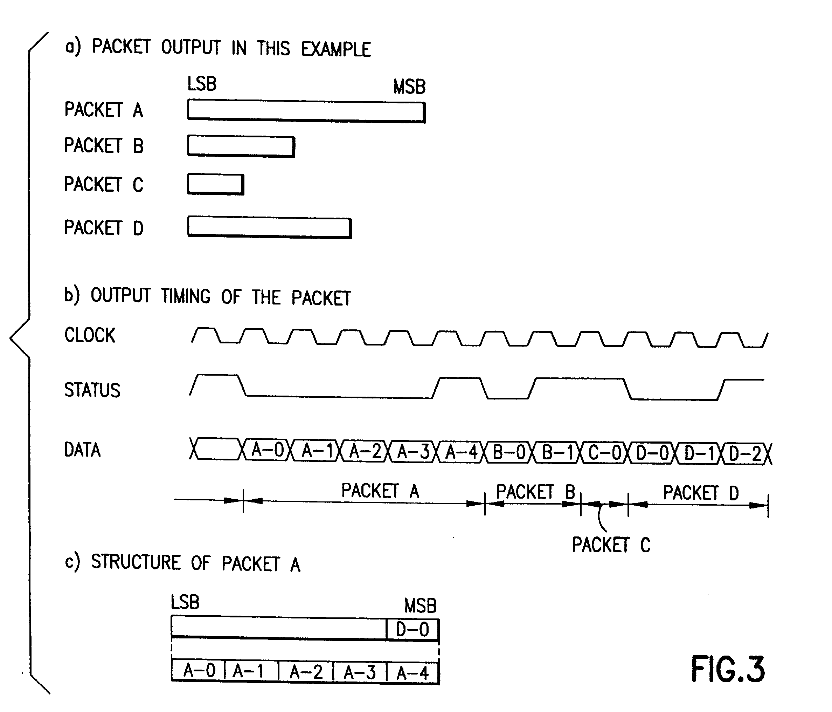

FIG. 3 is an example of outputting four packets: A, B, C, and D. The status output line indicates the completion of output of each packet. Using Packet A as an example, A-0, A-1, A-2, A-3, and A-4, which are output by the data output line at each clock, are bit strings which have the same bit length as the number of data output lines respectively. The bit string indicating Packet A is one which is composed by concatenating these bit strings A-0, A-1, A-2, A-3, and A-4 sequentially. If the packet bit length is not a multiple of the number of data output lines, zeros are added to MSB to obtain a bit length of a multiple of the number of data output lines.

### SUMMARY OF PACKET TYPES

There are eight types of packets, as follows:
1) The NSEQ packet, which indicates that there has been a change in the sequence of the program counter due to a branch or exception.
2) The TPC packet, which provides the branch target address due to a branch or exception.
3) The EXP packet, which indicates the occurrence of an exception.
4) The LSEQ packet, which indicates that a branch or exception has not occurred during a set period.
5) The MATCH packet, which indicates that a preset condition has been met.
6) The DATA packet, which provides data access in case the preset condition is data access.
7) The OVF packet, which indicates that there is a packet which has not been output due to too many occurrences of the aforementioned packet occurrence conditions.
8) The NOP packet, which indicates that there is no such packet as described above to indicate.

### EXPLANATION OF NSEQ PACKET

An NSEQ packet is output when there has been a change in the sequence of the program counter due to a branch or exception. As shown in the following NSEQ Packet Bit Configuration, this packet consists of a bit string {NSEQ} indicating that this is a NSEQ packet, and a bit string {COUNT} providing the PC value increase from immediately after the occurrences of the previous branch or exception to immediately before the occurrence of this branch or exception.

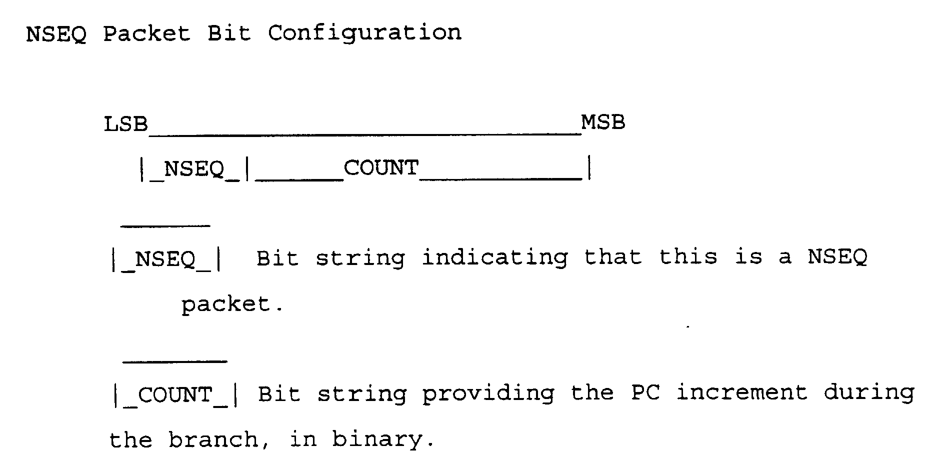

The bit string {COUNT} represents, in binary, the increased PC value by converting it into the unit system in which the increment of the PC is defined as one, and it is output with the lower significant bit first. However, the execution of the instruction which has caused the branch or its delayed branch slot instruction execution are not taken into account for this value.

The unit of the increment unit of the PC depends on the processor architecture. For example, in the case of a processor which uses both two-byte and four-byte instruction words, the PC increment unit is 2. In the case of a processor which uses only four-type instruction words, the PC increment unit is 4.

The following Example of Packet Output When a Branch Occurs shows a packet output example when a branch occurs in a processor which uses only four-byte fixed length instructions. After branch {1} occurs, five instructions are executed before branch {2} occurs, and the PC value increases by 20, so the bit string {COUNT} of the NSEQ packet due to branch {2} is 5 (101 in binary).

Example of Packet Output When a Branch Occurs

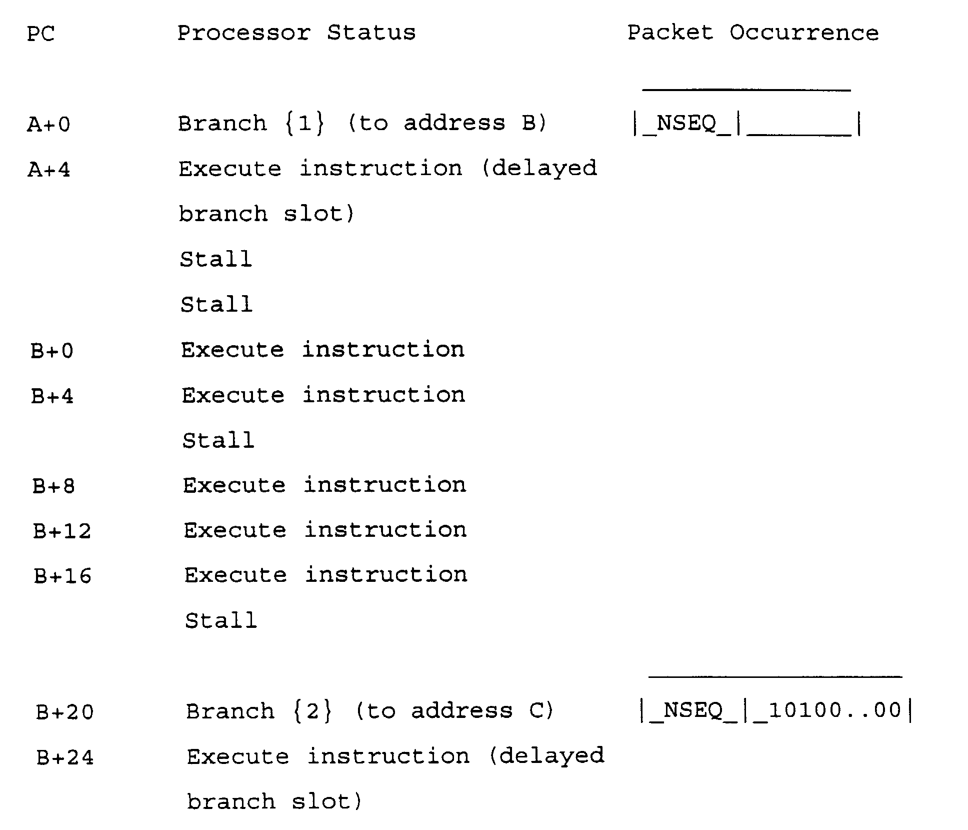

If this packet is traced, the PC value when the current branch or exception occurred--that is, the branch origin address--can be found by adding the incremented PC value indicated by the bit string {COUNT} to the branch target address of the previous branch or exception.

Using the example described above, we see that the branch instruction's branch origin address for branch {2} is (branch {1}'s branch target address 'B') + [(bit string '5' indicating the NSEQ packet's increment PC value) × (instruction length '4')], which is to say 'B+20'. Furthermore, the branch target address 'B' due to branch {1} can be found by disassembling the similarly obtained branch origin address 'A' instruction, or by using the TPC packet.

### EXPLANATION OF LSEQ PACKET

An LSEQ packet indicates that a branch or exception did not occur for a long time, and is output each time the increase in PC value after branches or exceptions exceeds a set value. As shown in the following LSEQ Packet Bit Configuration, this packet consists solely of a bit string {LSEQ} indicating that it is a LSEQ packet.

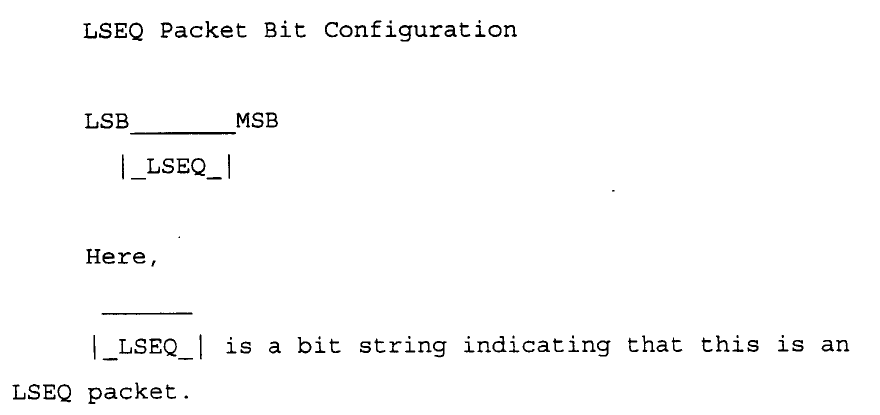

When this packet is output, the bit string {COUNT} in the NSEQ packet resulting from the next occurring branch or exception--that is, the starting point for calculating the added PC value--is not the PC value corresponding to the already occurred branch or exception but rather the PC value corresponding to the occurrence of this LSEQ packet. This allows the counter counting the increments of the PC and the bit length of the NSEQ packet to be limited to a fixed number of bits.

For example, if it is arranged that a LSEQ packet is output each time the PC value increases by 32 units, the following sequence occurs when there is a branch after the PC value increases by 70 units, as shown in this LSEQ Packet Output Example.

LSEQ Packet Output Example

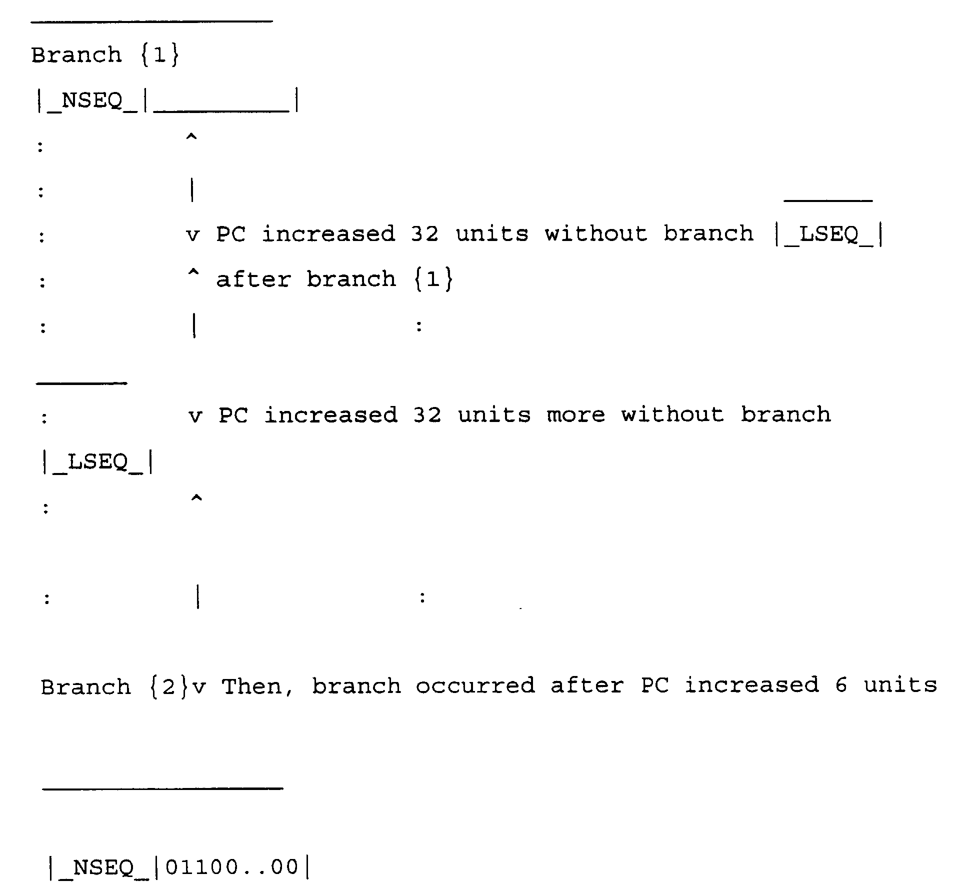

### EXPLANATION OF TPC PACKET

A TPC packet is output to provide the branch target address when a branch or exception occurs. As shown in the following TPC Packet Bit Configuration, this packet consists of the bit string {TPC} to indicate that this is a TPC packet and a bit string {TARGET} to provide the branch target address. The bit string {TARGET} which provides the branch target address gives the branch target address in binary, and is sent starting with the lower significant bits.

TPC Packet Bit Configuration

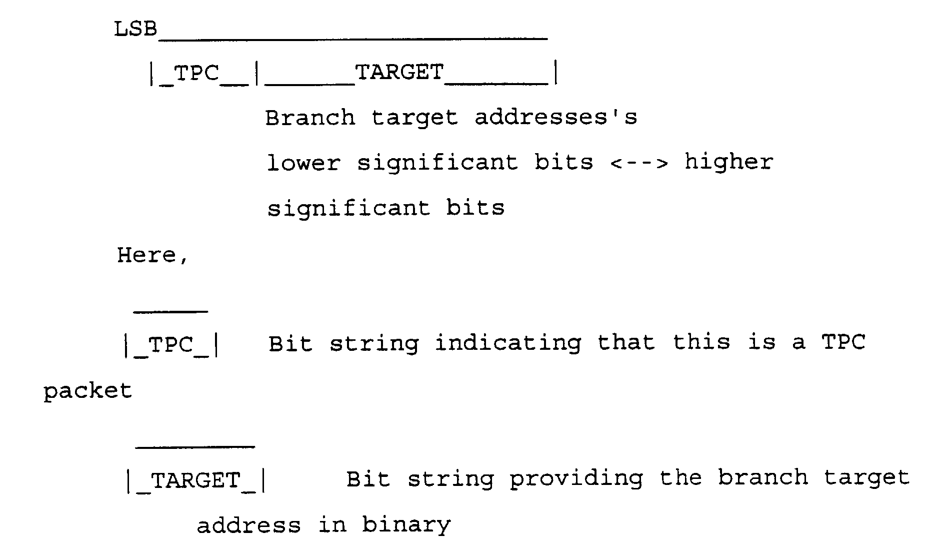

This packet does not have to be output if, after tracing, the branch target address can be obtained by disassembling the branch instruction of the branch origin address indicated by an NSEQ packet. For branch instructions for which a branch target address cannot be obtained, there are the register-indirect branch instruction or a return instruction from a subroutine, etc. When outputting a TPC packet due to a branch, the NSEQ packet and the TPC packet are output in sequence.

### EXPLANATION OF EXP PACKET

An EXP packet is output when an exception occurs. As shown in the following EXP Packet Bit Configuration, this packet consists of the bit string {EXP} to show that this is an EXP packet and a bit string {EXP_ID} to provide the cause of the exception. Exception causes vary according to processor architecture. Therefore the definitions of the bit string {EXP_ID} indicating the exception cause depend on the processor architecture.

EXP Packet Bit Configuration

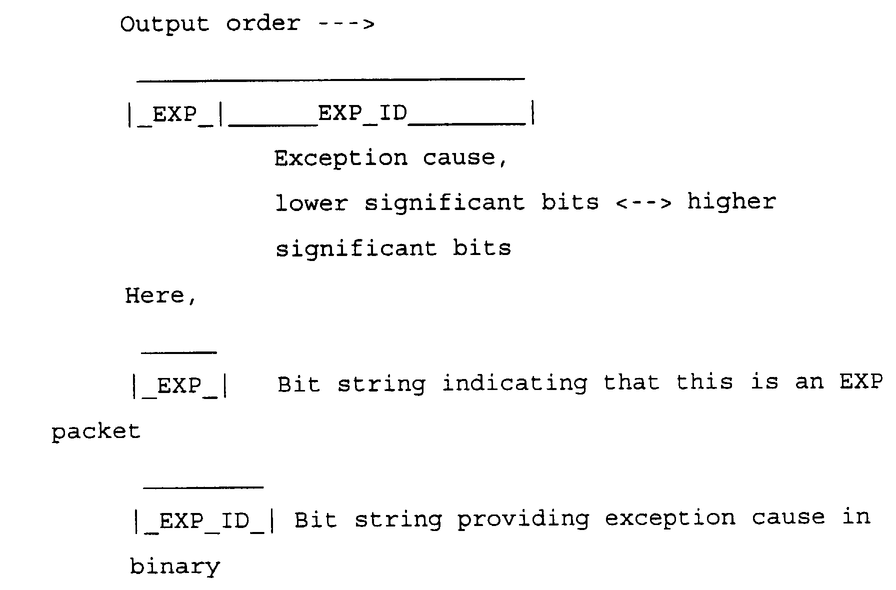

Using this packet enables tracing the occurrence and cause of exceptions. When an exception occurs, the NSEQ packet, EXP packet, and TPC packet are output in sequence to indicate the PC value when the exception occurred, the fact that an exception occurred and the exception cause, and the branch target address resulting from the occurrence of the exception.

### EXPLANATION OF MATCH PACKET

A match packet is output when a trigger from an external input terminal is reported, when execution of an instruction which matches a preset address is detected, or when data access matching a preset address or data or both is detected. As shown in the following MATCH Packet Bit Configuration, this packet consists of the bit string {MATCH} to indicate that this is a MATCH packet, and a bit string {INFO} to provide the met condition.

MATCH Packet Bit Configuration

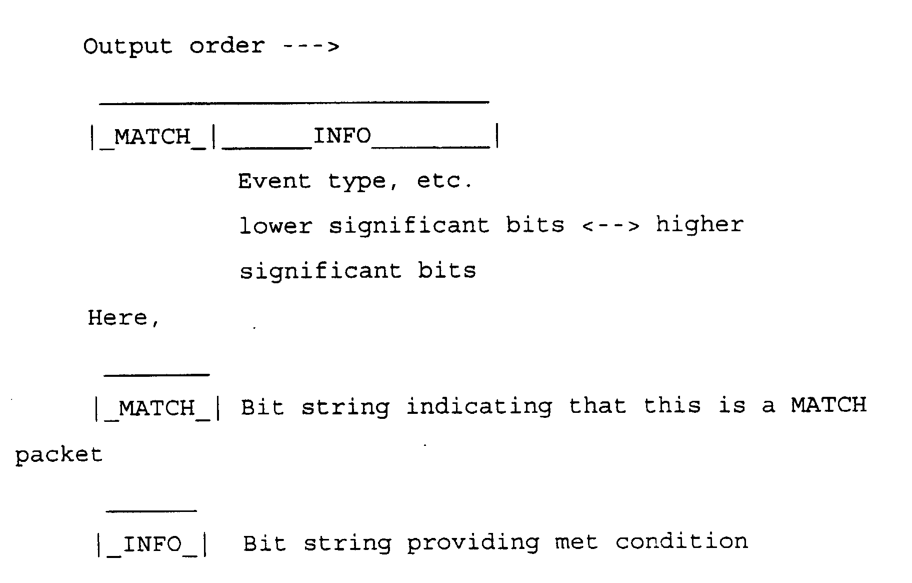

The bit string {INFO}, which provides the met condition, specifies the met condition using trace results. When detecting data access, information may be included in this bit string which tells if the set condition is either a read cycle or a write cycle. Even if the address is masked, read or write can be identified. And when comparing addresses, it is possible to know the actual value of position which is DON'T CARE because of a mask. The following MATCH Packet Data Access Bit Configuration Example shows an example of this sort of MATCH packet. The term channel of comparator is used herein. If a construction is used in which a plurality of match conditions can be set, just that many comparators are provided, and each of them are each referred to as channel.

MATCH Packet Access Bit Configuration Example

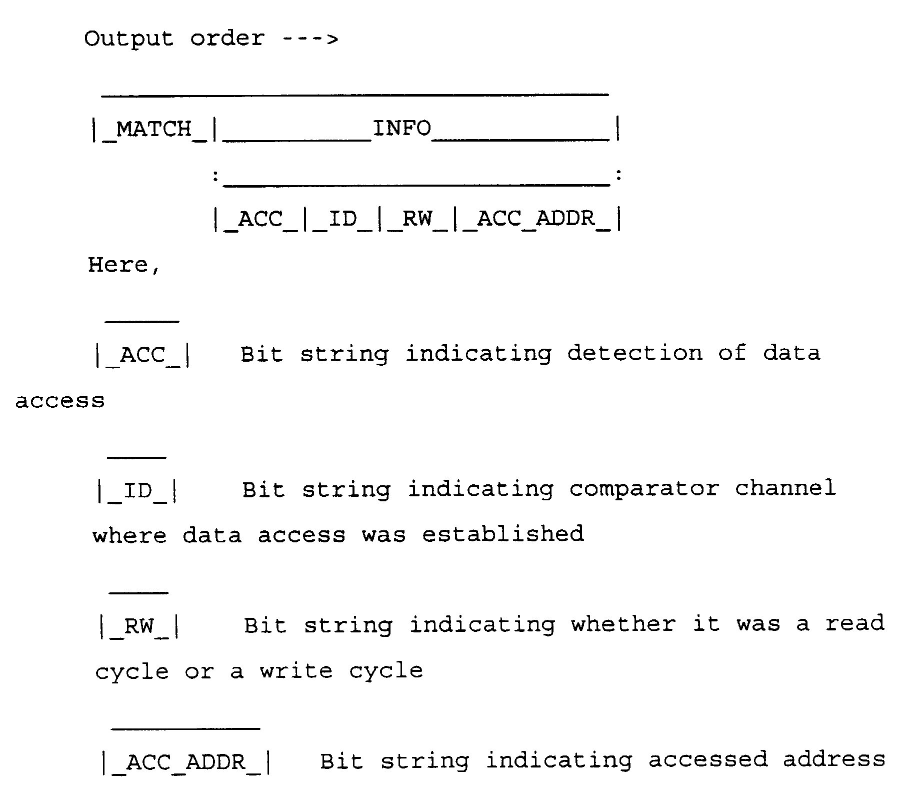

The bit string {ACC_ADDR} indicating the accessed address provides the accessed address in binary, and is set starting with the lower significant bits. When doing so, the value of the bits that have not been masked may be undefined.

### EXPLANATION OF DATA PACKET

A DATA packet is output when data access is detected which matches a preset address or data or both. As shown in the following DATA Packet Bit Configuration, this packet consists of the bit string {DATA} which indicates that this is a DATA packet and the bit strings {ACC_DATA} and {ACC_SIZE} to provide the access data and its size.

DATA Packet Bit Configuration

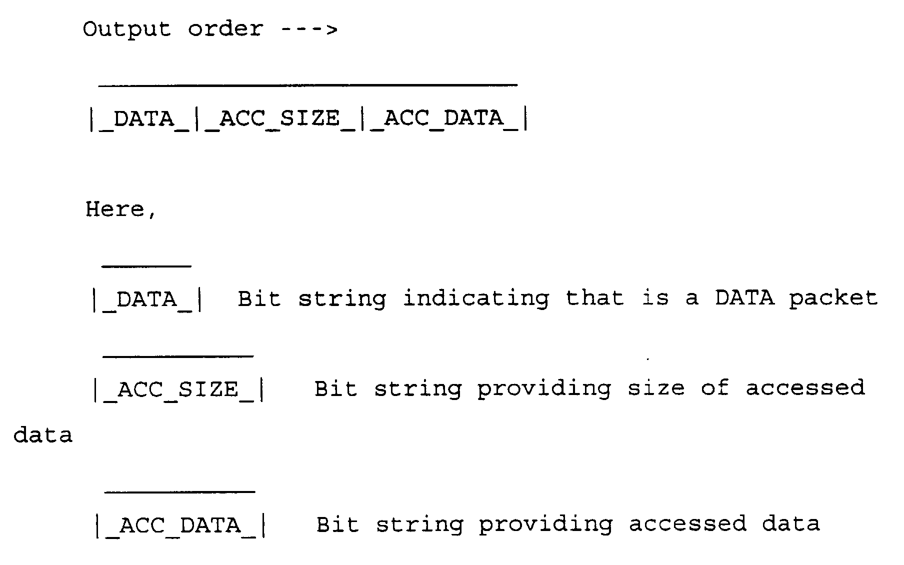

The types of access data size vary according to the processor architecture. Therefore definitions of the bit string {ACC_SIZE} indicating the size of the accessed data depend on the processor architecture. The bit string {ACC_DATA} providing the accessed data indicates the accessed data in binary, and is output starting with the lower significant bits.

### EXPLANATION OF OVF PACKET

An OVF packet is output when the trace buffer in the debugging module overflows and a packet cannot be output. This packet consists only of the bit string {OVF} to indicate that it is an OVF packet.

OVF Packet Bit Configuration

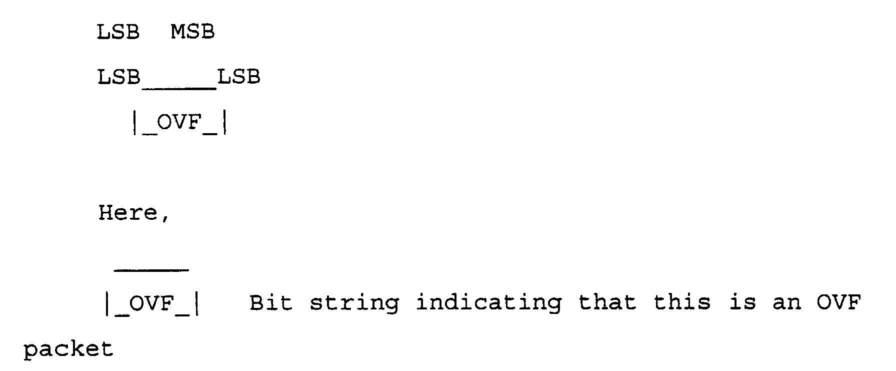

In the present invention, one processor status can extend across more than one clock. Therefore it is possible for a new packet to occur while a packet is being output. The trace buffer is a FIFO one which temporarily stores the newly generated packet until it can be output, i.e., until output of the packet currently being sent is completed.

Therefore, when packets are occurring frequently, there are instances when packet output can't keep up and the trace buffer overflows. When the trace buffer overflows, the OVF packet is output after all of the packets remaining in the trace buffer have been output. During this period, packet occurrence is masked. That is, the OVF packet indicates that in the interval until the next packet to be output there was a packet which couldn't be output due to trace buffer overflow.

### EXPLANATION OF NOP PACKET

A NOP packet is output when it is not necessary to output any of the packets described above. This packet consists only of the bit string {NOP} to indicate that it is an NOP packet.

NOP Packet Bit Configuration

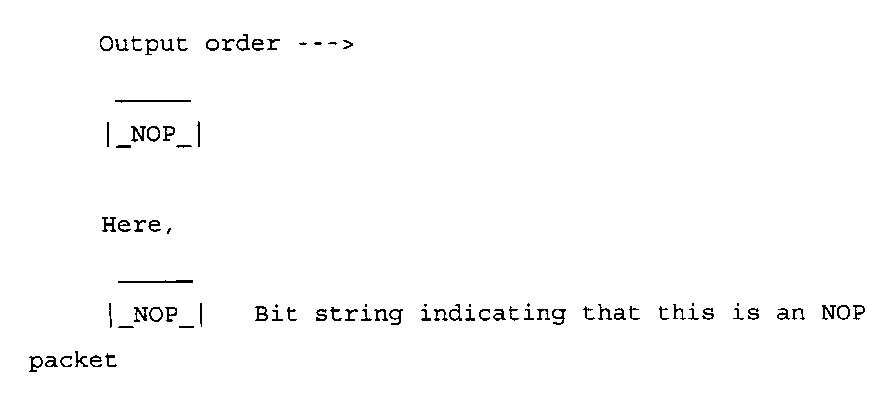

### TRACE MODE

Next we will explain modes for making this output system more efficient.

### REAL-TIME/NONREAL-TIME TRACE MODES

Real-time/nonreal-time trace modes are modes which select whether priority should be given to the real-time characteristics of a program or to trace completeness. The real-time mode is the mode which ensures the real-time characteristics of program execution, but with the possibility of the trace buffer overflowing. The nonreal-time mode is the mode for a complete trace because real-time characteristics of the program can be sacrificed to some extent. Because the processor operation is stalled, or stopped before the trace buffer overflows in this mode, OVF packets is not generated.

### OUTPUT PACKET SELECTION

This mode selects whether or not each type of packet is output when the packet output condition is met. Selecting which packet to output makes it possible to output only the necessary information, and reduces the possibility of trace buffer overflow in real-time mode and restrains the decline in real-time characteristics in nonreal-time trace mode. For example, it is possible to not output the NSEQ, LSEQ, and TPC packets when it is not necessary to trace the sequence of the program counter.

### SELECTIVE OUTPUT, FUNCTION BRANCH

This mode is for tracing branches between program modules. Normally a TPC packet is output when there is a change in the program flow due to branches, etc., and when the branch target address cannot be determined even by disassembling the branch instruction. But by using this mode, a TPC packet is output whenever a branch occurs due to a branch instruction with the possibility of being used in a branch between modules. Examples of this sort of branch instruction are subroutine/function call instructions, indirect branch instructions, and return from interrupt/exception instructions.

In this mode, program sequence can be tranced at the module level by tracing only TPC packets. When doing so, it is not necessary to output NSEQ packets or LSEQ packets. Because branches generally occur with greater frequency within a program module than between program modules, using this mode reduces the number of packets generated, further increasing the situations in which real-time tracing is possible. Furthermore, by tracing with MATCH packets and the like, it is possible to know which module was executing when a MATCH packet condition was met.

For example, the following Function Branch Trace shows an example in which the function main calls function sub. The data access condition is set before starting program execution, and it is set so that a MATCH packet will output when the address of the global variable glb_var is accessed.

We will explain the operation shown in Function Branch Trace according to the program execution sequence.
1) The function main is called when the program begins. The branch instruction used at this time is generally an instruction for calling a function, such as the JSR (Jump to Subroutine) instruction or the JAL (Jump and Link) instruction, etc. This sort of instruction outputs a TPC packet.
2) Next, the function sub is called during the function main. The branch instruction used at this time is the same sort of instruction as in 1), and a TPC packet is output.
3) Within the function sub, first, a loop is executed according to the for statement. The branch instruction used when doing so is usually a PC-relative conditional branch instruction, which is not used in inter-function branches. A TPC packet is not output in branches due to this sort of branch instruction.
4) A MATCH packet is output because the variable glb_var was accessed.
5) Return to function main. The branch instruction used at this time is generally a RTS (Return from Subroutine) instruction or a universal register-indirect jump instruction (JR instruction, Jump Register). The return from interrupt or exception instruction (RTI instruction, Return from Interrupt) is also used. A TPC packet is output for this sort of instruction.
6) After this, a MATCH packet is output because the variable glb_var was accessed again.

Function Branch Trace

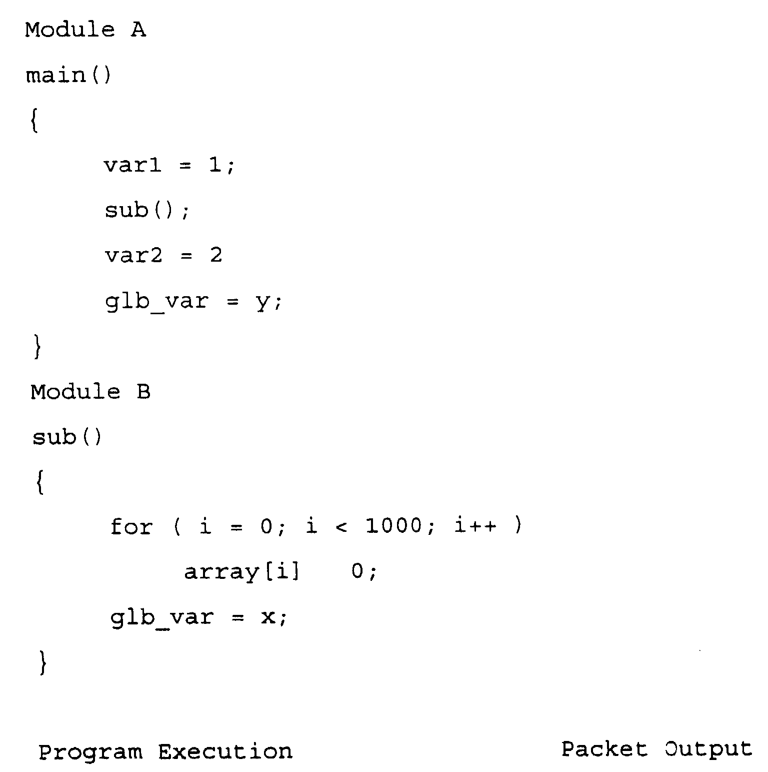

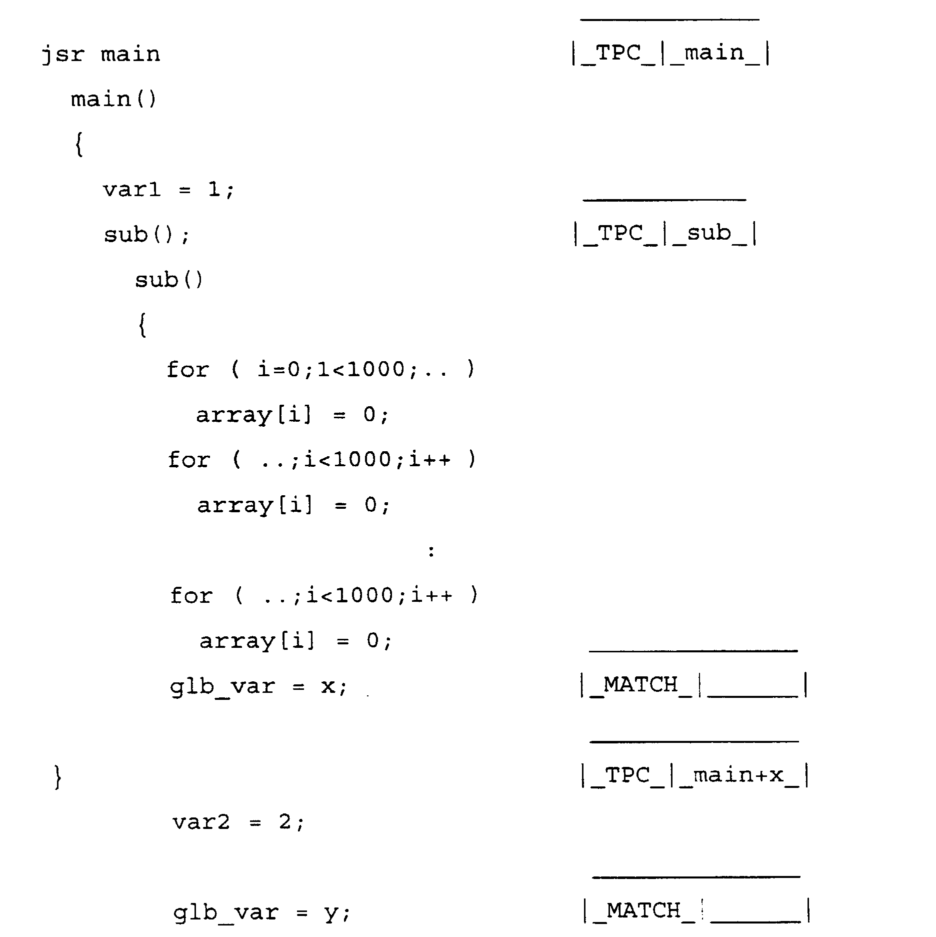

Tracing the packets shown above, we see that first the function main is called, the function sub is called, the variable glb_var is accessed within the function sub, [the program] returns to the function main, and then the variable glb_var is accessed by the function main once again.

### SHORTENING OUTPUT BIT LENGTH

In order to reduce as much as possible the number of clocks required for packet output, the present invention allows packet output to end in midstream in the following sorts of cases.
a) When it is a packet other than a TPC packet, and the bit string which has not been output is all zeros.
b) When it is a TPC packet, and the bit string which hasn't been output is the same branch target address as the TPC packet output immediately before.
(b) is used for TPC packets, and (a) is used for other packets.

First, we will explain Case (a) using as examples NSEQ packets and MATCH packets, for which this method is particularly efficient. As shown in the following Example in Which NSEQ Packet Output Can Be Halted in Midstream, terminating the NSEQ packet output doesn't matter when all of the bits which haven't been output yet are zero. Doing so increases the frequency of outputting NSEQ packets when the interval between branches is short, but it enables output with a brief number of clocks.

Example in Which NSEQ Packet Output Can Be Halted in Midstream

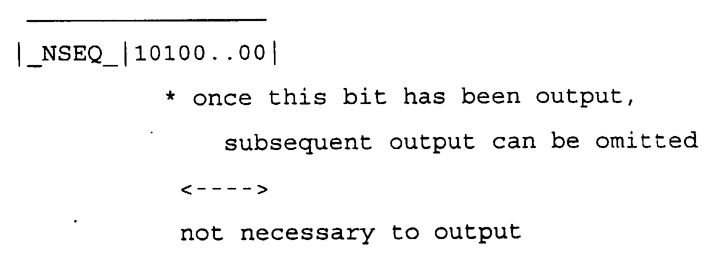

The following Example in Which MATCH Packet Output Can Be Halted in Midstream shows a case in which a MATCH packet is output due to data access detection, and the bit string {ACC_ADDR} is output to indicate the accessed address.

Because normally, address masking is used to detect access to a specified address block, the mask is usually applied to the lower significant bits. In addition, since the values of the bits that have not been masked is those set by the debugger side, they can be undefined in the packet. Therefore, if, when a condition is met, all the bits of the address comparisons on which bits have not been masked are set to zero, the higher bits that have not been masked become zero. Therefore it is possible to shorten the clocks needed for output.
The value of the bits that have not been masked made zero can be found by simply taking the logical product between address register and address register when a condition matches, or by using a method based on this. The following Example in Which MATCH Packet Output Can Be Halted in Midstream is an example of a case in which the address mask register consists of the same number of bits as the processor address which is to be compared, and the bit corresponding to the processor address is not compared when the address mask register bit is 1.

### Example in Which MATCH Packet Output Can Be Halted in Midstream

When the address 0x12345678 has been accessed and the lower significant 16 bits of the address that has been set has been masked.

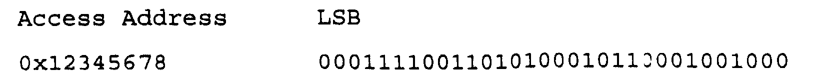

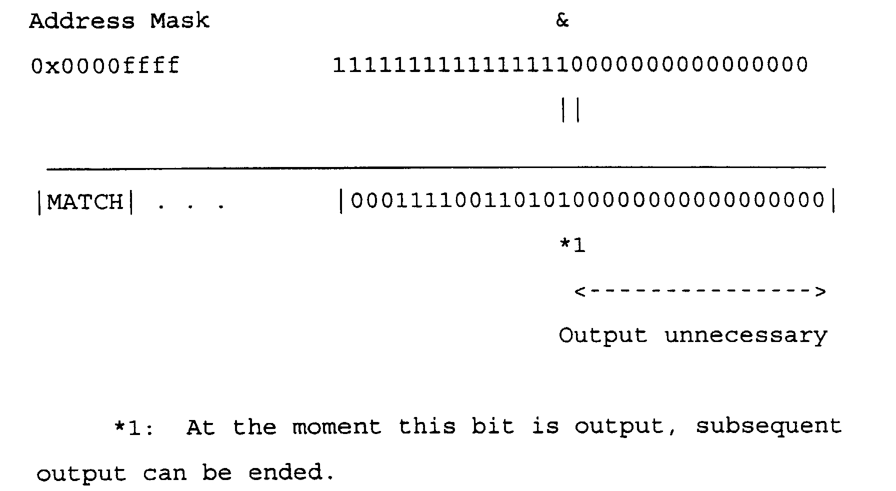

Next we will explain Case (b) using a TPC packet as the example. As shown in the following Example in Which Some High Order Bits Don't Have to Be Output, when a TPC packet is being output it isn't necessary to output the higher significant bit portion in which there was no change between the previously output branch target address and the branch target address which is currently being output. The addresses at which a program resides take up only a part of the total address space of the processor. Thus program-mapped addresses are localized, and program operation frequently branches to a nearby address, so often there is no change in the higher significant bits of the branch target address. Therefore, by using this function it is often possible to reduce the number of clocks needed for output. Immediately after tracing begins, all of the bits in "previous value" are given the value zero. Furthermore, this example is for a processor with a 32-bit address space and 32-bit fixed instruction length. Therefore, the lower significant two bits (A0 and A1) of the PC are always fixed at zero, so output starts with A2 and these two bits are not output.

Example in Which Some High Order Bits Do Not Have to Be Output

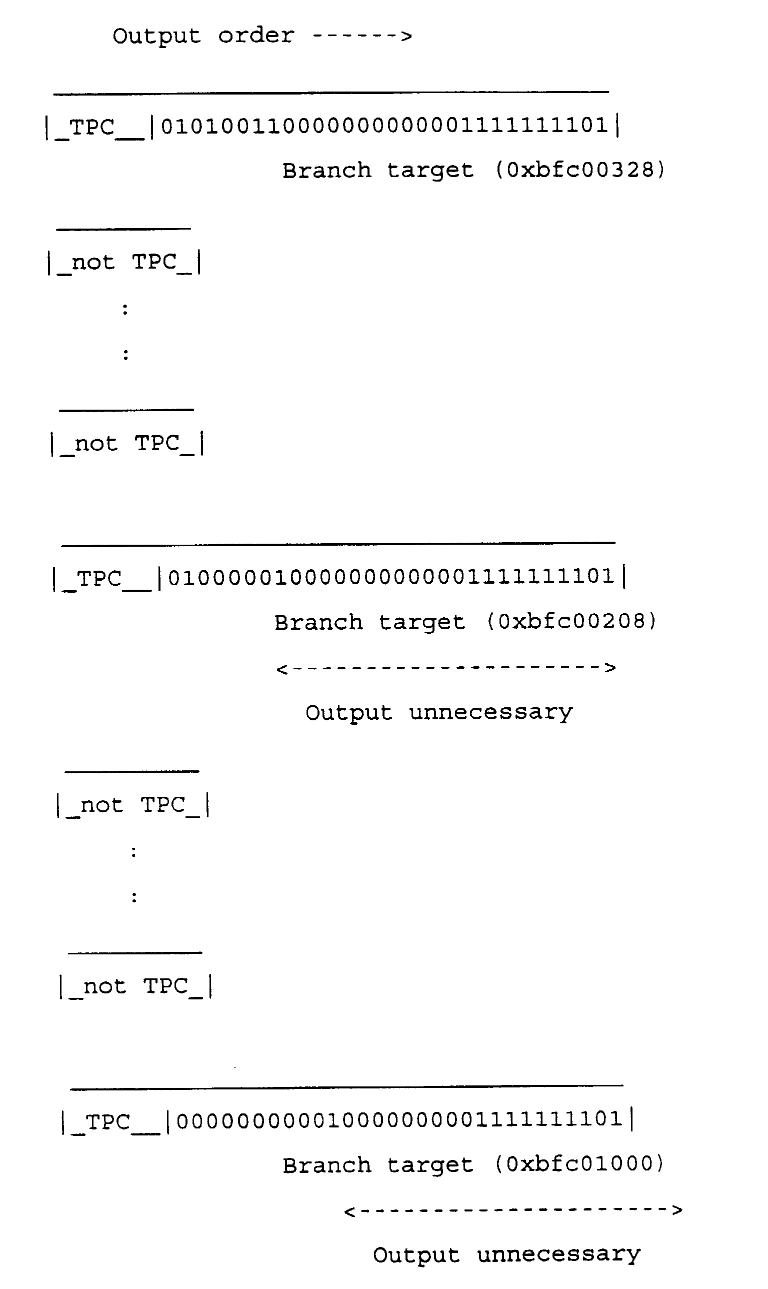

### TOOL STRUCTURE

We will explain several examples of means for recording the above-described trace output with tools.

### TOOL STORES EACH CLOCK

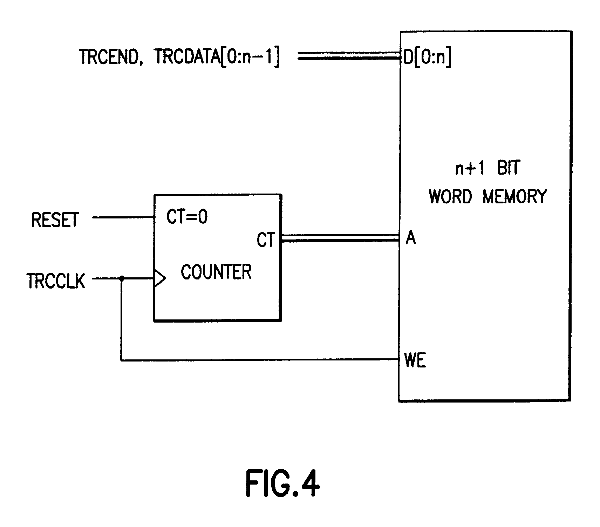

The easiest method of tracing as a debugging tool is the method which stores the values of the data output signal and the status output signal output from the debugging module as-is in the trace memory at each clock. FIG. 4 shows this structure. In principle this structure needs only a memory in which one word is the total number of data output signal lines and status output signals, and a counter to vary the address at each TRCCLK. Furthermore, the signal names and terminal names in FIG. 4 indicate the following:
- TRCEND:: Signal on status signal line from debugging tool providing a packet delimiter
- TRCDATA:: Signal on data signal line from debugging tool providing packet data
- Reset:: Counter reset signal
- TRCCLK:: Trace clock signal
- D:: Data input terminal
- A:: Address input terminal
- WE:: Write enable signal input terminal

Furthermore, in practice additional circuits are also required for a mechanism to stop storing to the trace memory when the trace memory is full, a mechanism to stop tracing before the trace memory becomes full, a mechanism to read the counter value when tracing stops, a mechanism to read from the trace memory after tracing ends, etc., but these will be omitted here.

### TOOL STORES EACH PACKET

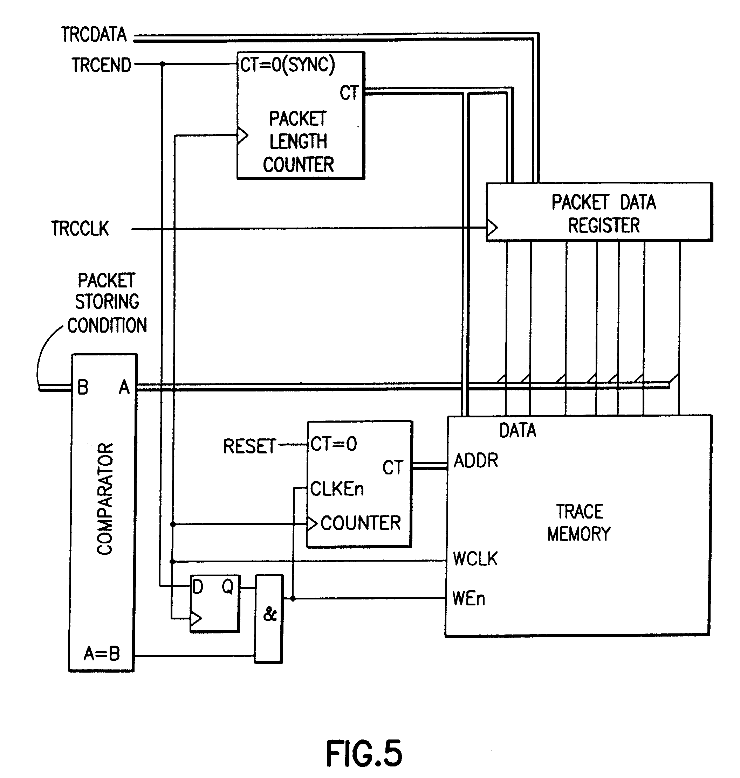

Another method of tracing as a debugging tool is the method which rearranges in parallel a packet divided into bit strings several bits in length according to the data output signal and the status output signal output from the debugging module, and makes them into one bit string and then stores it in the trace memory as a packet unit. Using this method makes it possible to use a comparator for comparison with preset conditions just before storage in the trace memory, and to record only the needed packets and to trace phenomena whose conditions match a trigger on a time basis. FIG. 5 shows the basic structure of this method. The essential elements of this structure are a counter (packet length counter) to count each trace clock from the packet head, a register that has enough bit width to fully store one packet, a packet data register which uses the output of the packet length counter and which consists of a decoder for indicating bits which this register should update, a trace memory for storing the output of the packet length counter and the output of the packet data register, a counter which changes the address for each packet stored, and a comparator for selectively storing packets. Furthermore, the signal names and terminal names and so forth in FIG. 5 indicate the following:
- TRCEND:: Signal on status signal line from debugging tool providing a packet delimiter
- TRCDATA:: Signal on data signal line from debugging tool providing packet data
- Reset:: Counter reset signal
- TRCCLK:: Trace clock signal
- CT:: Count output signal of packet length counter
- Data:: Data input terminal
- Addr:: Address input terminal
- WEn:: Write enable signal input terminal
- Wclk:: Write clock input terminal
- &:: AND gate
- A=B:: Output signal terminal indicating that the second input to the comparator has matched

The packet length counter is reset to the initial status, and is incremented at each clock. When the end of a packet is detected by the status output signal, the counter is reset.

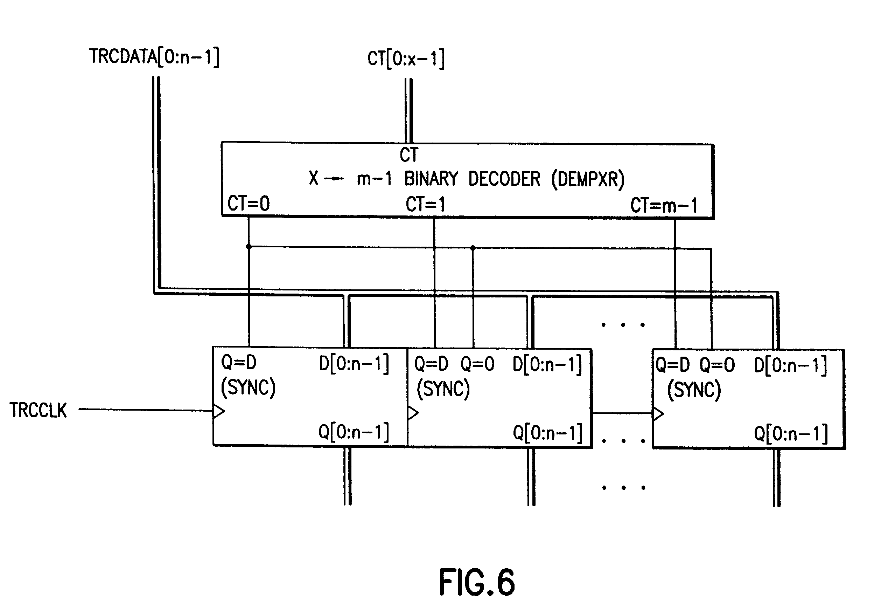

The packet data register, as shown in FIG. 6, provides several groups of registers with bit width of just the number of bits for the total number of data output signal lines. Input to each register is connected to the respective data output signal line, and each group can be written to. The decoder selects the register group which should be written to based on the output from the packet length counter. The selected register is written to by the trace clock according to the value output on the data output signal line. Furthermore, at the start of a packet--that is, when counter output is zero--everything except the least significant register group is cleared to zero.

Packet length is stored in the trace memory in order to determine which bits are higher significant bits not output in a TPC packet. A comparator is used to selectively store packets. By doing so, a packet is compared to a preset condition immediately before storage in trace memory, and only the necessary packets are traced. It is also possible to use comparator output for the trace trigger. A MATCH packet, for example, can be used as the trigger condition. Also, parts of the comparator and trace memory can be eliminated by using a logic analyzer state trace function. In this case more powerful trigger and store functions can be implemented.

Furthermore, in practice additional circuits are also required for a mechanism to stop storing to the trace memory when the trace memory is full, a mechanism to stop tracing before the trace memory becomes full, a mechanism to read the counter value when tracing stops, a mechanism to read from the trace memory after tracing ends, etc., but these will be omitted here to make the explanation easier to understand.

### TOOL: BRANCH TARGET REGISTER

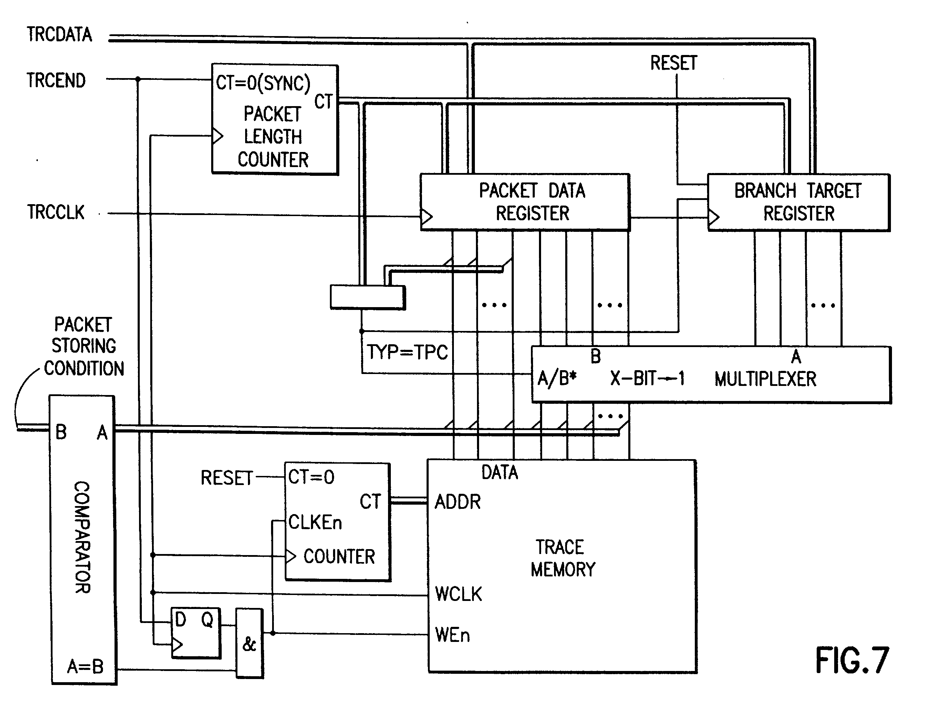

When a trigger is used and a TPC packet already stored in trace memory for tracing is overwritten, or when a TPC packet is not stored in trace memory immediately after the start of tracing because trace recording began in the middle of trace output, there is a possibility that TPC packet higher significant bits will not be recognized by the trace method described above. When performing this sort of trace, it is necessary to add a register to store the branch target address and a decoder to detect output of the branch target address. By doing so it becomes possible to always trace the complete branch target address. FIG. 7 shows the basic structure for implementing this.

In FIG. 7 the register which stores the branch target address has a bit width which can store a branch target address, and is a register for holding the branch target address output according to a TPC packet from immediately after tracing starts, and its value is updated each time a TPC packet is output. The packet type decoder detects whether or not the packet currently being output is a TPC packet, based on the packet length counter value, the status of the status output line and the data output line, and some lower significant bits from the packet data register. The branch target address register consists of a register which has the bit width to store a branch target address, and a decoder which uses the packet length counter output for indicating which bits in this register should be updated.

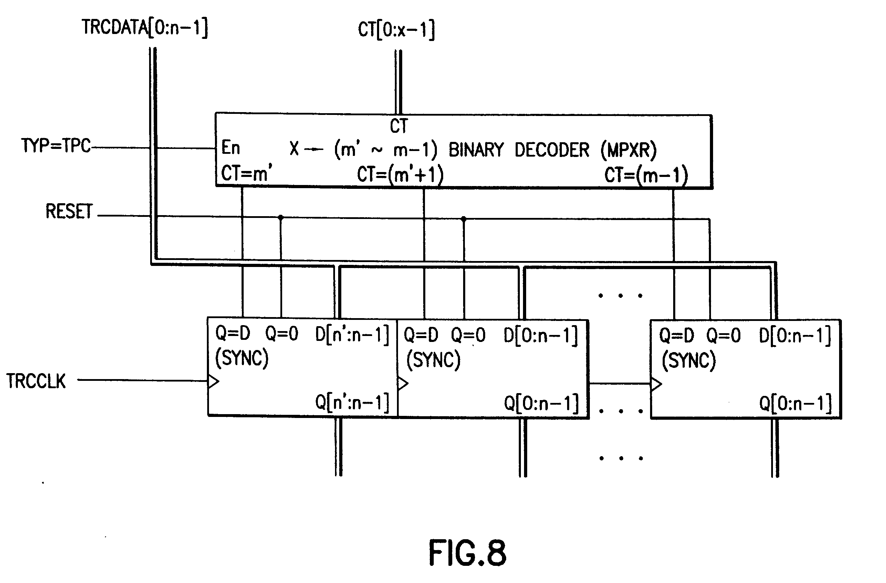

As shown in FIG. 8, the branch target address register, like the packet data register, consists of a number of registers in which one group has the number of bits of the total number of data output signal lines. However, the register part in the packet data register corresponding to the bit string which indicates that this is a TPC packet is not necessary. Furthermore, the decoder for indicating bits which should be updated can be shared with the one for the packet data register. The branch target address register updates according to the packet type data output only when a TPC packet is output. Immediately after a trace begins, its value is initialized to zero by the reset signal reset from the debugging tool.

The multiplexer has two inputs: one of which is a part of the packet data register which part stores the branch target address, and the other is the output of the branch target address register. If the packet type decoder indicates a TPC packet, the output of the branch target address register is sent to the trace memory; if not, the output of the packet data register is sent to trace memory. Because the TPC packet is always recorded in a form which has the complete branch target address, packet length need not to be recorded.

Based on this, it is possible to selectively store packets and trigger traces even for TPC packets too, by using a comparator. For example, when tracing in module branch mode, if the comparator has been set to make the branch target address portion of the TPC packet be the start address of a certain module, it is possible to apply a trigger or the like when a specific module is called.

The construction of the branch target address was explained in the manner of specifying the traced period with a trigger by taking the example of one that performs the recording in the unit of packet. In the method of recording at each clock, however, if the branch target register value is divided into sections corresponding to a plurality of clocks these sections are recorded in sequence together with the status of the status output line and the data output line, this can be implemented by simply adding one to several bits for the branch target address register to each word in the trace memory and thus it is efficient.

Furthermore, in either method, when a trigger is not used and trace recording starts in the middle of trace output and trace recording ends when the trace memory becomes full, only the branch target address register value at the start of the trace recording may be saved.

### DETAILED EMBODIMENT

### <1.1. Debug Port>

### <1.1.1 Mandatory Debug Port>

For the mandatory debug port, we use JTAG (The interface standard aiming at the test of boards and ICs proposed by Joint Test Action Group; this will not be further described herein since it is well-known to those skilled in the art. For details, refer to IEEE Std 1149.1-1990 (IEEE Standard Test Access Port and Boundary-Scan Architecture)) implementation as the default.

| | |
|---|---|
| TCLK | Input |
| TMS | Input |
| TDI | Input |
| TDO | Output |

### <1.1.2 Optional Debug Port>

The following signals are optional.

| | |
|---|---|
| TRST_L | Input |
| RMODE/BKTGIO_L | Input/Output |

### <1.1.3 RMODE/BKTGIO_L>

This pin has two functions, i.e., BKTGIO_L and RMODE. In the JTAG Test-Logic-Reset controller state, this pin works as RMODE. It works as BKTGIO_L in other states.

### <1.1.3.1 RMODE>

RMODE stands for Reset Mode. The debug module is initialized when TAP controller is in the Test-Logic-Reset controller state. This pin selects the initial value of the debug reset setting. The debug reset is the reset input to the processor. Its effect is the same as the reset input from the target system.

Depending on the level of the RMODE input, the debug reset setting is initialized in the JTAG Test-Logic-Reset controller state as follows.
Low: Enables the debug reset setting. The debug module is initialized in such a way that debug reset will be requested.
High: Disables the debug reset setting. The debug module is initialized in such a way that debug reset will not be requested.

This signal is necessary to avoid the target system's running into an unexpected state upon power-up if the boot program in ROM on the target system is incomplete at early development stage. When the tool is connected, the tool drives this signal low at the target system power-up. The processor can be held reset even after the reset input from the target system is released.

A pull-up register is necessary in the chip so that the level of the RMODE pin is high when the tool is not connected. If RMODE is high, there should be no effects from the debug module to the processor's activity.

### <1.1.3.2 BKTGIO_L>

RMODE/BKTGIO_L signal works as BKTGIO_L in other controller states than the Test-Logic-Reset controller state. The bidirectional signal BKTGIO_L is mainly used to break the processor execution by a trigger input from an external equipment or to trigger an external equipment at a specified event. This signal is disabled by the debug module reset.

If the signal is configured for output, the signal is driven low at the following condition.
- The processor is in the debug mode.
- A trace trigger condition is met.

These two conditions can be conFIG.d to drive or not to drive the signal individually.

### Break output

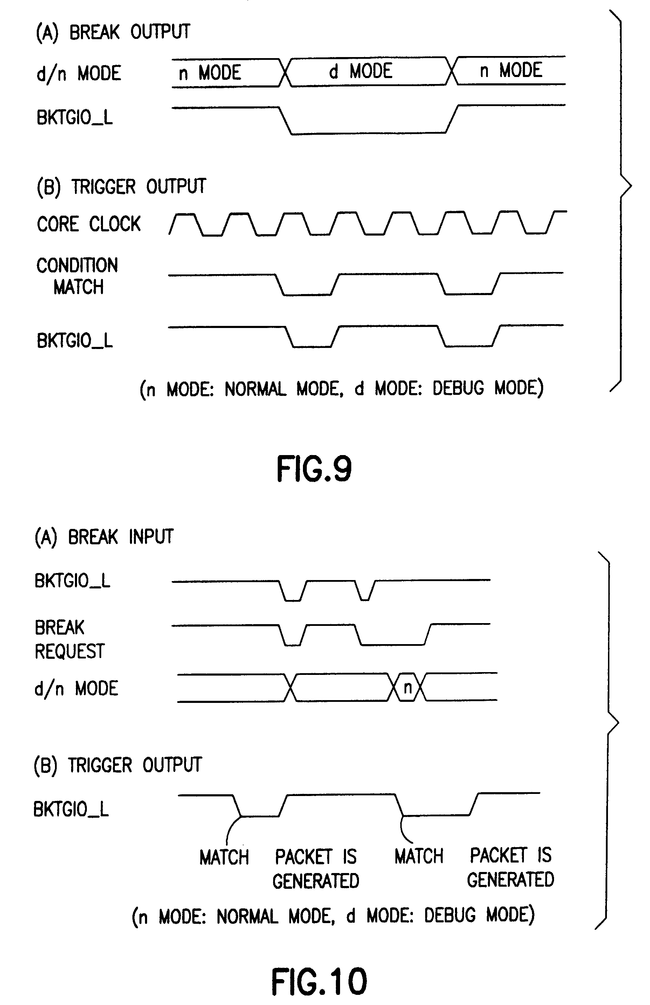

As shown in FIG. 9A, this signal will be driven low while the processor is in the debug mode..

### Trigger output

As shown in FIG. 9B, this signal will be driven low (pulsed) when a hardware breakpoint condition is met.

If the signal is configured for input, the debug module acts as follows when the level of the signal is changed from high to low.
- Breaks the processor into the debug mode.
- Generates a trigger packet for the N-Trace.

These two activities can be configured to be taken or not to be taken individually.

### Break input

Breaks the user program execution at a falling edge of the BKTGIO_L input. If the edge is inputted in the debug mode, it is put on hold until the processor comes back to the normal mode (see FIG. 10A).

### Trigger input

This capability is not required if the optional N-trace is not implemented. It generates an N-trace MATCH packet at falling edge of the BKTGIO_L input. If the edge is inputted even in the debug mode, a MATCH packet is outputted immediately (see FIG. 10B).

### <1.1.4 Debug Module Initialization>

As described in the previous "RMODE" section, the debug module is initialized in the Test-Logic-Reset controller state. The debug module does not effect onto the activity of the processor except for the debug reset function after the initialization.

### <1.2. Debug Capabilities Controlled via JTAG>

### <1.2.1 JTAG instructions>

Almost all the debug functions in the debug module are controlled via JTAG. JTAG private instructions must be implemented to control the debug module. JTAG optional instruction IDCODE must also be implemented to get the identification information of the processor.
a) JTAG IDCODE instruction must be implemented.
b) Some JTAG private instructions must be implemented for the debug tool.
   The following are permitted.
c) Instruction register length and bit assignment of the IDCODE instruction and the JTAG private instructions may differ from each processor family to another.

### <1.2.2 Device Identification Register>

This mandatory device identification register is used to configure the tool with user's minimum assist. After power-up, the tool determines whether the processor is supported or not by reading this register. If it is supported, the tool configures itself according to the value of this register.
a) The values of the device identification registers in the processor must have some common characteristic among the same processor family.
   The following are permitted.
b) There may be another register which can be accessed via JTAG to tell more details of the implementation options.

### <1.2.3 Debug Module Initialization>

This mandatory capability is used to initialize the debug module without entering the Test-Logic-Reset controller state. In this reset, the debug reset setting is not initialized and retains the previous setting.
a) All the debug functions must be initialized and disabled except for the debug reset.
b) The debug reset setting must not be changed.

### <1.2.4 BKTGIO_L/RMODE Signal Configuration>

### <1.2.4.1 BKTGIO_L/RMODE Implementation Flag>

This mandatory capability is used to know whether the BKTGIO_L/RMODE signal is implemented.
a) Existence of the BKTGIO_L/RMODE signal must be known in some way.
   The following is recommended.
b) It is recommended that the existence is known by a bit in a test data register selected by JTAG private instruction for the debug.
   The following is permitted.
c) The value of the device identification register may be used to tell the existence instead of the bit in a test data register. The tool must have a list of all the supported processor's ID and must know which processor has a BKTGIO_L/RMODE pin.

### <1.2.4.2 BKTGIO_L Signal Setting>

This mandatory (if the signal exists) capability is used to configure. the BKTGIO_L signal.
a) Enable or disable, direction (input or output) and function (break and/or trigger) must be configurable in any state, if the debug module is enabled.
b) BKTGIO_L signal must be initialized by the debug module reset. (disable, input)

### <1.2.5 N-trace Configuration>

### <1.2.5.1 N-trace Implementation Flag>

This mandatory capability is used to know whether N-trace is implemented.
a) Existence of the N-trace function must be known in some way.
   The following is recommended.
b) It is recommended that the existence is known by a bit in a test data register selected by JTAG private instruction for the debug.
   The following is permitted.
c) The value of the device identification register may be used to tell the existence instead of the bit in a test data register. The tool must have a list of all the supported processor's ID and must know which processor has a N-trace port.

### <1.2.5.2 N-trace Enable/Disable>

This mandatory (if N-trace exists) capability is used to enable or disable N-trace function.
a) Enable or disable must be configurable in any state, if the debug module is enabled.
b) N-trace must be initialized (disabled) by the debug module reset.

### <1.2.6 Run Control>

### <1.2.6.1 Debug Mode and Normal Mode>

We define Debug Mode and Normal Mode as follows.
Normal mode: In this mode, the processor is executing the user program or being reset (including the debug reset).
Debug mode: In this mode, the processor stops executing the user program.

### <1.2.6.2 Debug Reset>

This mandatory capability is used to input the processor reset signal from the debug tool (acts as well as the one from the target system).
a) It must be able to force or release the processor reset from any processor state.
b) The reset should be the same effect as the one from the target system.
c) In the Test-Logic-Reset JTAG controller state, this setting is initialized according to the RMODE signal. If RMODE is low, it requests the debug reset. Otherwise, it does not request the debug reset and processor is not reset if the target system is not driving the reset input. After leaving the Test-Logic-Reset JTAG controller state, the tool can change the setting via JTAG.
d) This setting should not be changed by the debug module initialization.

### <1.2.6.3 Debug Break>

This mandatory capability is used to request the break the processor into the debug mode asynchronously to the user program execution.
a) The processor must break the user program execution as soon as possible when the break is requested.
b) After the break, the processor must stay in the debug mode until it is instructed to exit.
c) Whether the request is succeeded or failed must be known.
d) If the break is failed, the request must be cleared by the debug module initialization.

### <1.2.6.4 Break from Debug Reset>

This mandatory capability is used to enter the debug mode after releasing the debug reset without any user program execution.
a) The processor must break into the debug mode when the tool releases the debug reset.
b) To avoid unexpected effects to the target system or the processor, the processor should not access the target system memory (for instruction fetch, etc.) and should not execute a user program instruction at transition from the debug reset to the debug mode.
c) Whether the request is succeeded or failed must be known. d) If the break is failed, the request must be cleared by the debug module initialization.

### <1.2.6.5 Resume User Program Run>

This mandatory capability is used to leave the debug mode and resume user program execution.
a) The processor must leave the debug mode if requested.
b) After leaving the debug mode, the processor must resume user program execution from the state just before the break. (except the case the tool has changed the state in response to a user request such as modifying register contents)
c) Whether the request is succeeded or failed must be known.
d) If the request is failed, the request must be cleared by the debug module initialization.

### <1.2.6.6 Run the User Program from User Reset Input>

This mandatory capability is used to start a user program from the reset handler synchronously to the target reset input.
a) The processor must wait for the processor reset input without executing a user program.
b) After the processor reset input, the processor must start a user program as the same behavior as the processor's normal operation.
c) Whether the request is succeeded or failed must be known.
d) If the request is failed, the request must be cleared by the debug module initialization.
e) Whether the target reset input is received or not must be known.
f) The mode must be cleared by the debug module initialization.

### <1.2.6.7 Run the User Program from Power-up>

This optional capability is used to start user program from the reset handler synchronously to the target power-up reset. Because the power is just being turned on, almost all the tool's capabilities will not work until the debug reset or the debug break.
a) The processor must wait for the power-up-reset without executing a user program.
b) After the power-up-reset, the processor must start user program as the same behavior as the processor normal operation.
c) The processor must respond to the debug reset or the debug break.
d) N-trace and hardware breakpoints must be configurable in the normal mode before first debug reset or debug break.
e) After the debug reset or the debug break, all of the tool's capabilities should be usable.

### <1.2.6.8 Software Breakpoints>

This mandatory capability is used to break the user program execution before the instruction at the specified address is just being executed. When the processor executes the special instruction called software breakpoint instruction, the processor breaks into the debug mode. Because this is implemented by replacing the instruction at the specified address with the software breakpoint instruction, there is no limit of the number of breakpoints which can be set at a time. However, it cannot be set where the memory is not RAM.
a) Replacing the instruction must be able to be done, at least, in the debug mode.
b) When the processor executes the software breakpoint instruction, the processor must break before executing the next instruction.
c) After the break, the processor must stay in the debug mode until it is instructed to exit.
d) The address where the software breakpoint instruction caused the break must be known.
e) The processor must be able to resume the program execution correctly after replacing the software breakpoint with the original instruction.
f) The length of the software breakpoint instruction must be the same as the length of the smallest instructions.
g) Whether the break is succeeded or failed must be known.
h) If the break is failed, the pending request must be cleared by the debug module initialization.

The following is recommended.
i) It is recommended that the debug module has a capability of replacing the instruction in the normal mode and in the debug reset as well as in the debug mode.
j) The software breakpoint instruction should not be public or be publicly reserved for debug use.
k) When a break occurs, the program counter should point to the address where the software breakpoint instruction is located.

### <1.2.6.9 Single Step Break>

This mandatory capability is used to execute the user program instruction step by step (executes only one instruction at a time). When the processor leaves the debug mode to the user program in the single step mode, the processor breaks into the debug mode after executing one instruction of the user program.
a) The single step mode setting must be changeable (enable/disable) in the debug mode.
b) The processor must break into the debug mode after executing one instruction of the user program.
c) After the break, the processor must stay in the debug mode until it is instructed to exit.
d) The instructions (its address and instruction counts) which are executed while stepping must be known.
e) The processor must be able to resume the program execution correctly.
g) Whether the break is succeeded or failed must be known.
h) If the break is failed, the pending request must be cleared by the debug module initialization.

The following is permitted.
i) To resume the program execution correctly. it is permitted to execute more than one instruction while stepping. For example, in case that the processor has a delayed branch instruction.

### <1.2.6.10 Hardware breakpoint>

This capability is used to break the user program execution by detecting a specified processor internal condition. This specification defines the following types of hardware breakpoints.

Instruction Address Breakpoint: The processor breaks the user program execution before executing the instruction at the specified address. Unlike software breakpoints, it can be set at an instruction in other than RAM.

Data Access Breakpoint: The processor breaks the user program execution at accessing the memory to the specified address with the specified data.

Also, hardware breakpoints can be used to trigger/trace external equipment and N-trace at a specified processor internal condition. Further, N-trace can output address and data used for a memory access specified by the data access breakpoint.
a) The hardware breakpoint setting must be changeable regardless of whether the processor is in the debug mode or the normal mode.
b) In the normal mode, a user program execution must not be affected (i.e. must not be stopped even temporarily) at changing the setting.
c) Each hardware breakpoint must be configurable individually. The configuration includes whether it breaks or not, whether it outputs a trigger or not, whether it outputs a match packet or not, etc..
d) After the break, the processor must stay in the debug mode (if the break is enabled).
e) Which hardware breakpoint caused the break (if the break is enabled) must be known.
f) The processor must be able to resume the program execution correctly (if the break is enabled).
g) Whether the break is succeeded or failed must be known (if the break is enabled).
h) If the break is failed, the pending request must be cleared by the debug module initialization (if the break is enabled).
i) Implementation options (number of channels, etc.) must be known.

### <1.2.6.11 Instruction Address Breakpoint (Hardware breakpoint)>

This mandatory capability is used to break the user program execution before the instruction at the specified address is just being executed. Unlike software breakpoints, it can be set at an instruction in other than RAM. This is also used to detect (but not break the user program execution) the instruction at the specified address is executed.
a) It must meet the rules described in the 'Hardware breakpoint' section.
b) The processor must break before executing the instruction where the breakpoint is set (if the break is enabled).
c) The address must be able to be specified in the resolution of the smallest instructions.
d) To support minimum run control feature in case that a user program code resides in ROM, the debug module must have at least one instruction address breakpoint.
e) The breakpoint must be able to be set at any address where user program code would resides.
f) The address where the instruction address breakpoint caused the break must be known (if the break is enabled).

The following is recommended.
g) The program counter should point to the address where the breakpoint is hit.

The following is optional.
e) The address comparison may have mask or range capability.

### Address Mask or Range

It is used to detect that the program goes out of or goes into the specified address block. By this reason, the mask may be effective to only lower address bit. The following two options must be selectable: (1) the breakpoint is hit when the address is in the range, and (2) the breakpoint is hit when the address is out of the range.

### <1.2.6.12 Data Access Breakpoint (Hardware breakpoint)>

This optional capability is used to break the user program execution at a data access (variable or I/O) to the specified address. This is also used to detect (but not break the user program execution) a data access to the specified address. N-trace can output data used for a data access specified by the data access breakpoint. In C language level debugging, it can be used to detect an access to the specified variable which resides in fixed memory location (global variable or static variable) or I/O.
a) It must meet the rules described in the 'Hardware breakpoint' section.
b) If the processor has separated I/O space, there must be a switch that selects memory space or I/O space for the comparison.
c) The processor must break by accessing the memory or I/O where the breakpoint is set (if the break is enabled).
d) The address must be able to be specified at least in the resolution of the smallest size of data.
e) The access type must be selectable from either read or write or both.
f) A breakpoint must be set at any address where user program accesses for data operation.

The following are optional.
g) The address comparison may have mask or range capability.
h) There may be data comparison.
i) The data comparison may have mask or range capability.
j) There may be more resource types in addition to memory and I/O.

### Address Mask or Range

It is used to detect that an access to the memory or I/O location out of/in the specified address block. For example, it breaks the user program execution when an illegal memory block is accessed or trace data accesses to the specified I/O block using N-trace. By this reason, the mask may be effective to only lower continuous address bit. The following two options must be selectable: (1) the breakpoint is hit when the address is in the range, and (2) the breakpoint is hit when the address is out of the range.

### Data Comparison

It is used to detect an access with the specified data. For example, it breaks the user program execution or trigger N-trace when contents of a specified variable becomes a specified value.

### Data Mask or Range

It is used to detect that an access to the memory or I/O location with a data out of/in the specified range or pattern. For example, it breaks the user program execution or trigger N-trace when a specified bit of a specified variable becomes a specified value. By this reason, the mask must be specified at each bit individually. The following two options must be selectable: (1) the breakpoint is hit when the address is in the range, and (2) the breakpoint is hit when the address is out of the range.

### Resource Type

It is used to detect that an access to a processor resource other than memory or I/O. Possible processor resources are on-chip cache, on-chip TLB and registers (including those in its co-processor).

### <1.2.6.13 Debug Mode Flag>

This mandatory capability is used to examine whether the processor is in the debug mode or in the normal mode. By using this, the tool can detect a break has occurred or know the permission to invoke debug functions which are not permitted in the normal mode.
a) The flag must indicates that the processor is in the debug mode or in the normal mode.
b) The flag must be accessible regardless of whether the processor is in the debug mode or the normal mode.

### <1.2.6.14 Break Cause Flags>

This mandatory capability is used to examine the cause of the break. The tool does the post-processes that are needed after the break according to the break cause.
a) The flags must be updated at each occurrence of break.
b) The flags must be accessible in the debug mode.
c) If the break was requested by the multiple break causes, all the causes must be indicated.

### <1.2.7 Processor Status>

### <1.2.7.1 Processor Status Flags>

This mandatory capability is used to examine the current processor status. By using this, the tool can avoid sending a command that will fail in certain processor status or knows the cause of the failure if a request of a debug function was rejected. It is also used to tell the current processor status to the user.
a) The flags must be updated at each occurrence of processor status change.
b) The flags must be accessible regardless of whether the processor is in the debug mode or the normal mode.
c) All the processor states in which debug functions will fail must be indicated.

The following is recommended.
d) Only one processor status may be indicated in the following priority.
Highest slow or no clock
reset
halted
bus released
slow or no bus cycles
Lowest processor normal status

### <1.2.7.2 Address where a bus is hung up>

This optional capability is used to examine the address when the bus cycle is hung up due to no ready response.

### <1.2.8 Memory and I/O Access>

There are three requirements in memory or I/O access capability from the tool side.
Normal access to memory or I/O in the debug mode (mandatory)
Quick access to memory or I/O (optional)
Fast program download into memory (optional)

### <1.2.8.1 Normal access to memory or I/O in the debug mode>

This mandatory capability is used to access memory or I/O in the debug mode. The tool can display and modify variables (including local variables) and I/O. Also it is used to set or remove software breakpoints.
a) Memory or I/O must be accessible for use of variable read/write and software breakpoint set/removal.
b) Memory or I/O at any address where the processor can access must be accessible.
c) Whether the access is completed or not and succeeded or failed must be known.
d) When the access is attempting to cause an exception (for example, bus error), the exception must not occur and it must be known that the access is terminated abnormally and its reason.
e) If the access is not completed, the influence must be as minimum as possible. For example, if the bus cycle is hung up due to no response (infinite waits), the tool must be able to abort the bus cycle.
f) If the access is failed, it must be initialized by the debug module initialization.
g) Even if the processor has the privileged mode and the user mode, memory and I/O must be accessible regardless of the modes.

The following is permitted.
h) It is unnecessary to be able to access in the normal mode or the processor reset (including the debug reset).

### <1.2.8.2 Quick Access to memory or I/O>

This optional capability is used to access memory or I/O very quickly. The main purpose is that the user can monitor global variable, static variable or I/O without interfering the user program execution.
a) Memory or I/O access must not stop the user program execution, or stop the user program execution for very short time.
b) Memory or I/O access must be taken place regardless of whether the processor is in the debug mode or normal mode.
c) Whether the access is completed or not and succeeded or failed must be known.
d) Memory or I/O at any address where user program accesses for data operation must be accessible.
e) When the access is attempting to cause an exception (for example, bus error), the exception must not occur and it must be known that the access is terminated abnormally and its reason.
f) If the access is not completed, the influence must be as minimum as possible. For example, if the bus cycle is hung up due to no response (infinite waits), the bus cycle must be aborted.
g) If the access is failed, it must be initialized by the debug module initialization.
h) Even if the processor has the privileged mode and the user mode, memory and I/O must be accessible regardless of the modes.

The following is permitted.
i) It is unnecessary to be able to do Quick Access in the processor reset (including the debug reset).
j) Only read access may be supported.

The following is recommended.
k) It is recommended that the manner of the access is the same as the normal access.

### <1.2.8.3 Fast program download into memory>

This optional capability is used to download user program into memory.
a) Writing to memory block must be fast.
b) Memory at any address where a user program resides must be writeable.
c) Whether the access is completed or not and succeeded or failed must be known.
d) When the access is attempting to cause an exception (for example, bus error), the exception must not occur and it must be known that the access is terminated abnormally and its reason.
e) If the access is not completed, the influence must be as minimum as possible. For example, if the bus cycle is hung up due to no response (infinite waits), the tool must be able to abort the bus cycle.
f) If the access is failed, it must be initialized by the debug module initialization.
g) Even if the processor has the privileged mode and the user mode, memory must be accessible regardless of the modes.

The following is permitted.
h) It is unnecessary to be able to do fast download in the normal mode or the processor reset (including the debug reset).

The following is recommended
I) It is recommended that the manner of the access is the same as the normal access.

### <1.2.8.4 Register Access>

This mandatory capability is used to access register in the debug mode. The tool can display and modify registers.
a) All the processor registers which are used by user program must be accessible in the debug mode.
b) Whether the access is succeeded or failed must be known.
c) If the access is failed, the request must be cleared by the debug module initialization.
d) Changes made onto registers which control some functions that are active even in the debug mode must be effective immediately. (for example, on-chip peripheral registers)
e) Even if the processor has the privileged mode and the user mode, registers must be accessible regardless of the modes.

The following are permitted.
f) Read only registers may be impossible to write. Write only registers may be impossible to read.

### <1.3. Standard Implementation>

### <1.3.1 JTAG Debug Instructions>

The JTAG optional instruction IDCODE must be implemented.
IDCODE Device Identification Register.

Also, the following instructions are defined as JTAG private instructions for debug use.
- DM_SYSTEM: Selects Debug Module System Register.
- DM_CONTROL: Selects Debug Module Control Register.
- DM_RADDR: Selects Debug Module Resource Access Address Register.
- DM_RDATA: Selects Debug Module Resource Access Data Register.

Details of the test data registers which the JTAG private instructions select are described below.

### <1.3.2 IDCODE register>

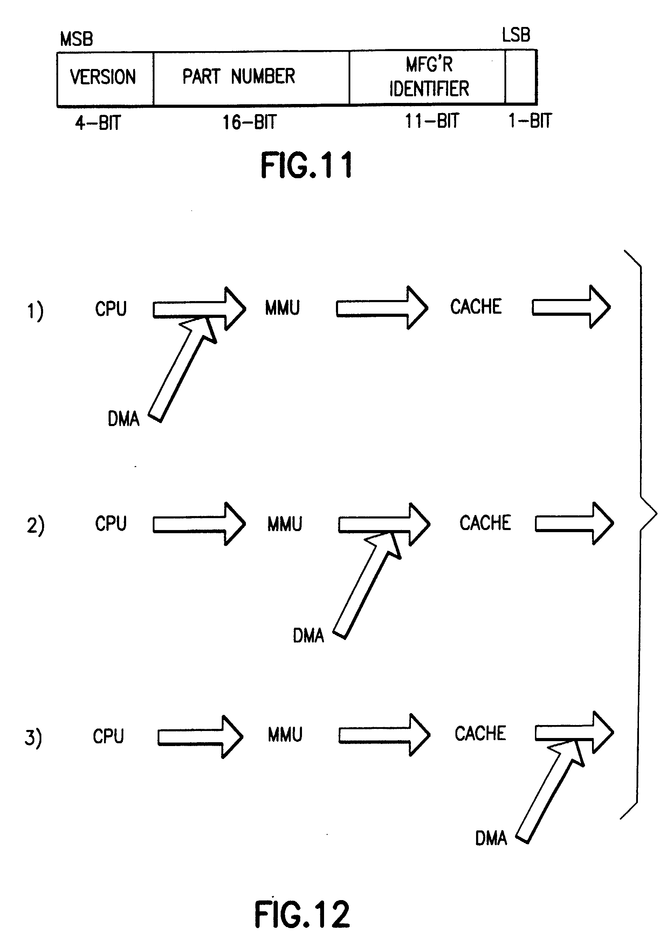

The structure of this register is shown in FIG. 11.

There are functions that indicates whether the device has the debug module or not and the processor family identification code for each manufacturer. The debug tool can determine them by using the functions given from the manufacturer.

For example, if the tool supports the processor family whose part number is 0x123? and the MSB of the version indicates whether the device has the debug module or not, the functions represented in the programming language C-like style are as follows.

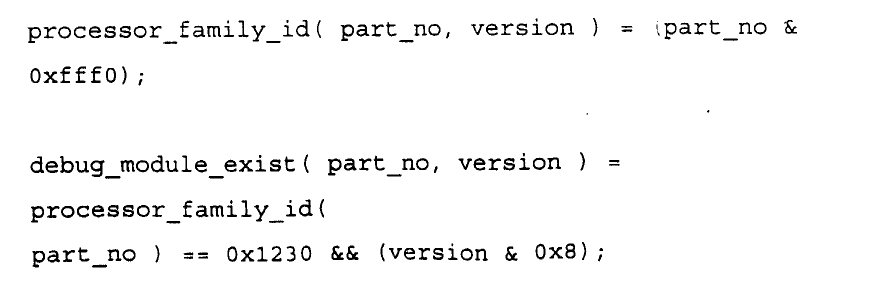

### <1.3.3 Debug Module System Register>

- DINIT: Initialize the Debug Module (R/W)

1: Reset (initialize) the debug module.
0: Release the reset of the debug module.
Defaulted to 1 in the Test-Logic-Reset controller state.
- BKTGIO: BKTGIO_L/RMODE signal implementation (R)

1: Implemented.
0: Not implemented.

- BKTGIODIR: Direction of BKTGIO_L (R/W)

1: Input
0: Output
Defaulted to 1 at the debug module initialization.
- BKTGIOBEN: BKTGIO_L break enable. (R/W)

1: Enable to drive trigger at a processor break or to break the processor at a BKTGIO_L input.
0: Disable
Defaulted to 0 at the debug module initialization.
- BKTGIOTEN: BKTGIO_L trigger enable (R/W)

1: Enable to drive trigger at a N-Trace trigger or to trigger N-Trace at a BKTGIO_L input.
0: Disable
Defaulted to 0 at the debug module initialization.
- NTRACE: N-trace Implementation (R)

1: Implemented.
0: Not implemented.

- NTRACEEN: N-trace Enable (R/W)

1: Enable
0: Disable
Defaulted to 0 at the debug module initialization.

### <1.3.4 Debug Control Register>

- RESET: Debug Reset (R/W).

1: requests debug reset
0: releases debug reset

Defaulted in the Test-Logic-Reset controller state according to the level of the RMODE input if the RMODE exists. Defaulted to 0 in the Test-Logic-Reset controller state if the RMODE does not exit.
- BREAK: Break request (R/W).

Write 1: command to request break
Write 0: no operation
Read 1: command is not completed (still requesting break)
Read 0: break is completed
This bit is cleared when the break is completed.
Defaulted to 0 at the debug module initialization.
- EXIT: Exit debug mode (R/W).

Write 1: command to leave debug mode
Write 0: no operation
Read 1: command is not completed (still in debug mode)
Read 0: command is completed

This bit is cleared when the command is completed in case that the break occurs just after the exit to the normal mode.
- To avoid exiting again.
- To detect the new break if the tool cannot detect the normal mode by the debug mode flag.
Defaulted to 0 at the debug module initialization.
- MRST: Mask user reset in the debug mode (R/W).

1: ignores (masks) target reset input in the debug mode
0: accepts target reset input in the debug mode
Defaulted to 1 at the debug module initialization.
- MNMI: Mask user NMI (R/W).

1: suppress the occurrence of NMI
0: do not suppress the occurrence of NMI
It is assumed that the NMI is edge sense input.
Pending NMI must occur when the bit is cleared.
Defaulted to 0 at the debug module initialization.
- MINT: Mask user interrupt (R/W).

1: ignores user interrupt input
0: accepts user interrupt input
Defaulted to 0 at the debug module initialization.
- STEP: Single step break (R/W)

1: enable single step break (single step mode)
0: disable single step break
Defaulted to 0 at the debug module initialization.
- DBM: Indicates debug mode or normal mode (R)

1: debug mode
0: normal mode

- BRKCAUSE: Break cause (R). This consists of multiple bits.
One bit is assigned for each break cause and corresponding bit is set when the break occurred. Multiple bits are set if the break occurred by multiple break causes.

The bit assignments are defined as follows.
Bit 0: external break
Bit 1: single step
Bit 2: software breakpoint
Bit 3: BREAK
Bit 4: break from RESET
Bit 5: instruction address breakpoint
Bit 6: data access break point

- CPUSTAT: Processor status (R). The processor status is encoded as follows.

| Bit 2 1 0 | processor status |
|---|---|
| 0 0 0 | reset (highest) |
| 0 0 1 | standby |
| 0 1 0 | sleep |
| 0 1 1 | halted |
| 1 0 0 | bus release |
| 1 1 1 | normal (lowest) |

- ACTFLG_CLK: Processor Clock Active Flag (R/W). The ACTFLG_CLK bit indicates clock activity. The debug tool can detect that no clock is supplied into the processor from the target system board.

Write 1: no operation
Write 0: Clear active flag.
Read 1: Clock is active
Read 0: Clock is inactive

This flag is set when there's any activity on clock. This flag is cleared when the debug tool writes 0 into this bit.
- ACTFLG_BUS: Bus Cycle Active Flag (R/W). The ACTFLG_BUS bit indicates bus activity.

Write 1: no operation
Write 0: Clear active flag.
Read 1: Bus cycle is active
Read 0: Bus cycle does not occur since the flag was cleared

This flag is set when there's any activity on bus. This flag is cleared when the debug tool writes 1 into this bit.

### <1.3.5 Resource Access>

The following resources can be accessed in the same manner.
- user memory
- user registers
- debug registers (hardware breakpoints, etc.)

The following registers are used to access user resources.
- DM_RADDR: Selects Debug Module Resource Access Address Register.
- DM_RDATA: Selects Debug Module Resource Access Data Register.
- DM_RADDR: consists of the following bits.
- ADDR: address of the resource to access
- RW: read / write
- ADDRINC: address increment
- TYPE: type of the resource to access (memory, I/O, register etc.)
- ASID: address space ID (process ID)
- MMUE MMU: enable / disable
- CACHEE: cache enable / disable
- OPSIZE: operation size
- DM_RDATA: consists of the following bits.
- DATA: the data to store / retrieved
- START/BUSY: Start processor resource access. Cleared when the access is done.
- ABORT/ERR: Aborts the current access. Set when an error occurs during access.

Resource access can be done with the following sequence.
Read access

1) Set the following parameters to the registers.
- ADDR: set the memory address (user memory) or the register number (user register or debug register) to be read.
- RW: set to 1 for read access.
- TYPE: set the type of the resource (user memory, user register or debug register).
- ASID: set the process ID if the processor is equipped with an MMU (when user memory is being accessed).
- MMUE: select whether the access should be done through an MMU if the processor is equipped with the MMU (when user memory is being accessed).
- CACHEE: select whether the access should be done through a cache if the processor is equipped with the cache (when user memory is being accessed).
- OPSIZE: set the operation size from 8 bits, 16 bits, 32 bits or etc..
- ADDRINC: set the address increment when a block of memory or registers is being accessed.

2) Set START/BUSY to 1 to start the access.

3) Wait until START/BUSY cleared to 0. ABCRT/ERR indicates whether the access has been terminated successfully.

| | |
|---|---|
| ABORT/ERR | |
| 0 | The access has been terminated sucessfully. DATA contains the data which are retrieved by the access. |
| 1 | The access has been terminated with an error. |

If START/BUSY is not cleared for a long time, the access may be hung up. In this case, ABORT/ERR should be set to 1 to abort the access.

4) Set START/BUSY to 1 to continue the access to the next location.

### Write access

1) Set the following parameters to the registers.
- ADDR: set the memory address (user memory) or the register number (user register or debug register) to be written.
- RW: clear to 0 for write access.
- TYPE: set the type of the resource (user memory, user register or debug register).
- ASID: set the process ID if the processor is equipped with an MMU (when user memory is being accessed).
- MMUE: select whether the access should be done through an MMU if the processor is equipped with the MMU (when user memory is being accessed).
- CACHEE: select whether the access should be done through a cache if the processor is equipped with the cache (when user memory is being accessed).
- OPSIZE: set the operation size from 8 bits, 16 bits, 32 bits or etc..
- ADDRINC: set the address increment when a block of memory or registers is being accessed.
- DATA: set the data to be written.

2) Set START/BUSY to 1 to start the access.

3) Wait until START/BUSY cleared to 0. ABORT/ERR indicates whether the access has been terminated successfully.

| | |
|---|---|
| ABORT/ERR | |
| 0 | The access has been terminated successfully. |
| 1 | The access has been terminated with an error. |

If START/BUSY is not cleared for a long time, the access may be hung up. In this case, ABORT/ERR should be set to 1 to abort the access.

4) Set START/BUSY to 1 to continue the access to the next location.

### <1.3.5.1 In the case the processor is equipped with a cache and an MMU>

In the case the processor is equipped with a cache and an MMU, the user access should be done through the cache and the MMU. It is required to be able to choose to whether enable or disable the cache and the MMU respectively. It is also required to be able to invalidate a specific entry of the cache.

Normally, the user specify a logical address. If MMU is used, they should specify both a logical address and an address space ID (process ID).

### Normal access

In order to keep the coherency between the data cache and the main memory, the cache must be enabled. If the tool changes contents of the memory that is in the instruction cache, it should invalidate the corresponding entry of the instruction cache. Setting a software breakpoint is a good example.

On the contrary, the MMU must be disabled to avoid a TLB miss. The user interface or the debugger must be able to convert logical addresses to physical addresses using the symbol information stored in the object module.

Some debugger may leave the MMU on in order to access the memory through the current settings of the MMU.

### Quick access

In order to keep the coherency between the data cache and the main memory, the cache must be enabled. On the contrary, the MMU must be disabled to avoid a TLB miss. The user interface or the debugger must be able to convert logical addresses to physical addresses using the symbol information stored in the object module.

### Fast download

The cache must be disabled and invalidated. The program must be loaded into the main memory. The user interface or the debugger must be able to convert logical addresses to physical addresses using the symbol information stored in the object module.

### <1.3.6 Instruction address breakpoint>

Hardware breakpoints should be accessible through "Resource Access" scheme. At least, one instruction address breakpoint is a must. It is primarily used as a breakpoint when the system is ROM based. (So software breakpoints can't be used.) It is also used to trigger the trace.

The actions to be taken must be selectable from "Break", "Trigger", "Both", and "None".

### <1.3.6.1 Instruction address breakpoint register>

The following registers are used to set an instruction address breakpoint.

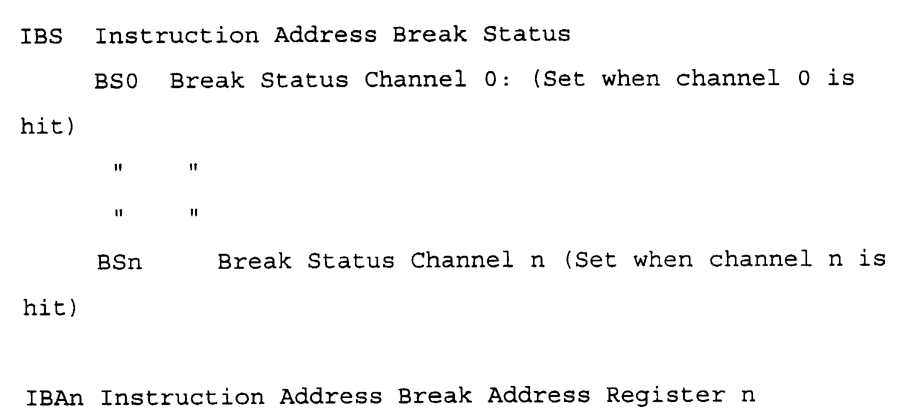

Stores the address of the instruction address breakpoint. When the instruction stored in the specified address is being executed, the condition is met. The granularity of the instruction address must be the minimum length of the instructions.
- IBCn: Instruction Address Break Control Register n
- BE: Break Enable. Break a user program when the condition is met.

The instruction stored in the specified address must not be executed.
- TE: Trigger Enable.

Output a trigger on BKTGIO_L, when the condition is met. A trigger is outputted, even if the break occurs.

If N-trace is implemented, there should be more bits to specify conditions to output N-trace packets.

### Address Mask

The following registers are added for the address mask.
- IBAMn: Instruction Address Break Address Mask Register

Bit mask for IBAn. If a bit of this register is 1, the corresponding bit of IBAn is not compared. It is not required to mask all the bits. Lower bits should be masked in such a case.

Further, it is acceptable to mask more than one bit by one mask bit. Examples are, a mask bit for each 4 bits, a mask bit for lower 16 bits, or a mask bit for lower 24 bits. It is also acceptable to specify how many bits (from LSB) are masked in binary.

The following bit is added to IBCn.
- IBCn: Instruction Address Break Control Register

INV 0 - The breakpoint is hit, when conditions match.
1 - The breakpoint is hit, when the conditions don't match.

### Address Range

If the address is compared by "range", the following registers are used instead of IBA.
- IBALn: Instruction Address Break Address Low Register
- IBAHn: Instruction Address Break Address High Register
The address match occur, if the address is in the range between IBALn and IBAHn. (including the both boundaries, i.e., IBALn and IBAHn)

The following bit is added to IBCn.
- IBCn: Instruction Address Break Control Register

INV 0 - The breakpoint is hit, when the conditions match.

1 - The breakpoint is hit, when the conditions don't match.

### <1.3.6.2 How the breakpoint should work>

If the BE (Break Enable) bit is set, a break must occur before the instruction of the specified address is executed. The program counter should point to that instruction. The tool then resets the instruction breakpoint, and lets the user program run from the current program counter. The user program should be able to resume its work. Special attention should be paid for a breakpoint at branch delay slot, or an overrun break situation (the case a break occurs after the instruction is executed). A break should not occur, if the instruction is not being executed. Examples are a branch, an exception, or a break at the previous instruction.

### <1.3.6.3 In the case the processor is equipped with a cache and an MMU>

The set address must be logical. There should be a way to specify the address space ID in addition to the logical address. The address space ID is specified in the following bits of IBCn.
- ASID: address space ID
- ASIDM: 1 - ASID is masked.

### <1.3.7 Data Access Break Point>

Hardware breakpoints should be accessible through "Resource Access" scheme. It is used to break a user program when it accesses the specified address with the specified data. Access type such as read or write should also be specified. It is also used to trigger the trace. The actions to be taken must be selectable from "Break", "Trigger", "Both", and "None".

### <1.3.7.1 Data access break point register>

The following registers are used to set a data access breakpoint.

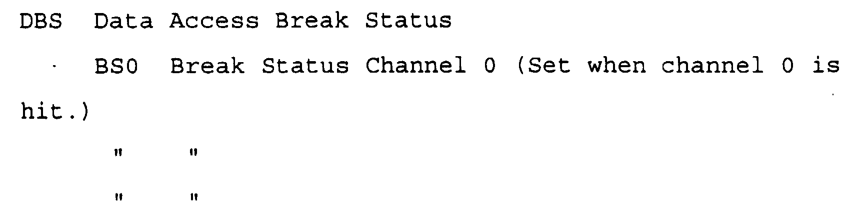

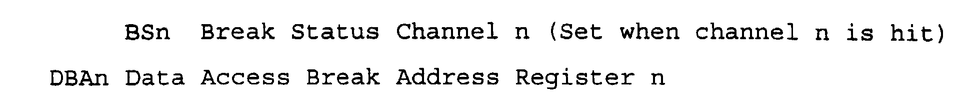

The condition is met, when the specified address is accessed.
- DBDn: Data Access Break Data Register n

The condition is met, when the data read or written is equal to the specified data.
- DBCn: Instruction Address Break Control Register n
- MEM: Memory

The condition is met at memory access cycles only.
- IO: I/O Access

The condition is met at I/O access cycles only.
- DBE: Data Comparator Byte Enable

The bit length is equal to the number of bytes for the processor's data word. Each bit corresponds to the processor's byte enable.

When the bits are set, data condition is not met if the processor is not enabled the corresponding data bytes.
- BEA: Break Enable at Address Match

Break a user program when the address condition is met.
- BED: Break Enable at Data Match

Break a user program when the data condition is met.

If both the BEA bit and the BED bit are set, break is requested when the both conditions are met. If the both are cleared, break is requested regardless of the comparators' results.
- BERD: Read Access.

The break condition is met at read cycles only.
- BEWR: Write Access.

The break condition is met at write cycles only.

If both the BERD bit and the BEWR bit are set, break is requested regardless of the access type. If the both are cleared, break is not requested.
- TEA: Trigger Enable at Address Match

Output a trigger on BKTGIO_L, when the address condition is met. A trigger is outputted, even if the break occurs.
- TED: Trigger Enable at Data Match

Output a trigger on BKTGIO_L, when the data condition is met. A trigger is outputted, even if the break occurs.

If both the TEA bit and the TED bit are set, a trigger is outputted when the both conditions are met. If the both are cleared, a trigger is outputted regardless of the comparators' results.
- TERD: Read Access.

The trigger condition is met at read cycles only.
- TEWR: Write Access.

The trigger condition is met at write cycles only.

If both the TERD bit and the TEWR bit are set, a trigger is outputted regardless of the access type. If the both are cleared, a trigger is not outputted.

If N-trace is implemented, there should be more bits to specify conditions to output N-trace packets.

### Address Mask

The following registers are added for the address mask.
- DBAMn: Data Access Break Address Mask Register

Bit mask for DBAn. If.a bit of this register is 1, the corresponding bit of DBAn is not compared.

It is not required to mask all the bits. Lower bits should be masked in such case.

Further, it is acceptable to mask more than one bit by one mask bit. Examples are, a mask bit for each 4 bits, a mask bit for lower 16 bits, or a mask bit for lower 24 bits. It is also acceptable to specify how many bits (from LSB) are masked in binary.
- DBCn: Data Access Break Control Register

AINV 0 - The breakpoint is hit, when the conditions match.
1 - The breakpoint is hit, when the conditions don't match.

### Address Range

If the address is compared by "range", the following registers are used instead of DBA.
- DBALn: Data Access Break Address Low Register
- DBAHn: Data Access Break Address High Register

The address match occur, if the address is in the range between DBALn and DBAHn. (including the both boundaries, i.e., DBALn and DBAHn)

The following bit is added to DBCn.
- DBCn: Data Access Break Control Register

AINV 0 - The breakpoint is hit, when the conditions match.
1 - The breakpoint is hit, when the conditions don't match.

### Data Mask

The following registers are added for data mask.
- DBDMn: Data Access Break Data Mask Register

Bit mask for DBDn. If a bit of this register is 1, the corresponding bit of DBDn is not compared. It is required to mask every single bit of DBDn.

The following bit is added to DBC.
- DBCn: Data Access Break Control Register

DINV 0 - The breakpoint is hit, when conditions match.
1 - The breakpoint is hit, when the conditions don't match.

### <1.3.7.2 How the breakpoint should work>

After a break, the tool resets the data access breakpoint, and lets the user program run from the current program counter. The user program should be able to resume its work. There may be some time gap between the time when the instruction that causes the data access cycle is executed and the time when the break really takes place. Instructions may be executed during this time gap.

### <1.3.7.3 In the case the processor is equipped with a cache and an MMU>

The set address must be logical. There should be a way to specify the address space ID in addition to the logical address. The address space ID is specified in the following bits of DBCn.
- ASID: address space ID
- ASIDM: 1 - ASID is masked.

### <1.4. level 2 standard>

The following specification should be observed, where the level 1 standard is not applicable.

### <1.4.1 Monitor>

When it is difficult to access user resources such as registers, memory and cache through JTAG directly, running a monitor program is an alternative.

Choose one of the options listed below, if the monitor is used.

### <1.4.1.1 In the case a monitor program is run on a few words of internal buffer>

Two JTAG instructions should be added. One is to access MON_INST, MON_DATAACC, and MON_INSTEXEC. The other is to access MON_DATA.
- MON_INST: monitor instruction register

The processor fetches an instruction from this register when it is in the debug mode.
- MON_DATA: monitor data register

In the debug mode, the processor accesses the data in this register at any load / store instructions if MON_DATAACC bit is set to 1. If MON_DATAACC is cleared to 0, the processor accesses the normal user memory.
- MON_DATAACC: monitor data access flag

Indicates whether load / store instructions access MON_DATA or user memory, while the processor is in the debug mode.
- MON_INSTEXEC: execute a monitor program

Writing 1 into this bit makes the processor fetch an instruction from MON_INST register and executes it. The processor should clear this bit, when it finishes executing the instruction. Writing 0 is ignored.

### <1.4.1.2 In the case the monitor program is placed at dedicated monitor memory>

If the monitor is placed on ROM, a register for data access is required. Or a part of user RAM must be used for a monitor. If the monitor is to be placed on RAM, there must be a mechanism to download the monitor.

### <1.4.1.3 Loading a monitor program>

If the monitor can't be loaded during the processor reset, there must be a mechanism that prohibits the monitor from running after the first break after the reset.

### <1.4.1.4 How to return to a user program>

When a monitor program is used, returning to a user program can be achieved by a special instruction (a return instruction) instead of writing 1 to EXIT bit as described in level 1 standard. In this case, RUNFLAG bit (instead of EXIT bit) should be prepared in order to judge whether a user program has run or not.
- RUNFLAG: used to judge whether a user program has run Set when a user program has run. Writing 0 clears it.

### Writing 1 is ignored.

The debug tool clears this bit, before it returns to normal mode. When the RUNFLAG is set, the break cause will be checked by reading BRKCAUSE.

### <1.4.2 Quick Access>

If it is difficult to insert Quick Access mechanism internal to an MMU, there are two alternatives; You can insert this mechanism between the MMU and the cache (method 2), or outside the cache (method 3).

Quick Access is achieved by DMA-like mechanism. You can access static variables, or I/O with a minimum impact on a user program by this. It also speeds up the code downloading.

DMA-like mechanism can be connected to the processor's bus at one of the three positions shown in (1) through (3) of FIG. 12.

### <1.4.2.1 Method (1)>

Method (1) is strongly recommended. If you use the method (2) or (3), there will be some limitations.

### <1.4.2.2 Method (2)>

It is impossible to refer to the current MMU settings, when memory is accessed by Quick Access.

### <1.4.2.3 Method (3)>

Fast downloading is done in the debug mode right after reset (cache is also reset). So Method (3) will be useful for code downloading although the following limitations will apply.
If the cache is write-back, the contents of the main memory and of the cache may differ. So reading from write-back cached area by Quick Access can't be supported.

If cache snooping is not supported and the main memory is written some data, the content of the cache will differ from the main memory. So writing to the cached area can't be supported, if snooping isn't supported.

Normal memory access (not Quick Access) is done in the debug mode. The tool can do write-back at write cycles or invalidate an entry at read cycles. So the problems mentioned above can be solved.

### <1.4.2.4 In the case where no Quick Access is supported.>

All the memory accesses are done by a monitor. So neither Quick Access nor fast downloading is not supported.

N-trace section will be explained below.

### <2.1. Trace port>

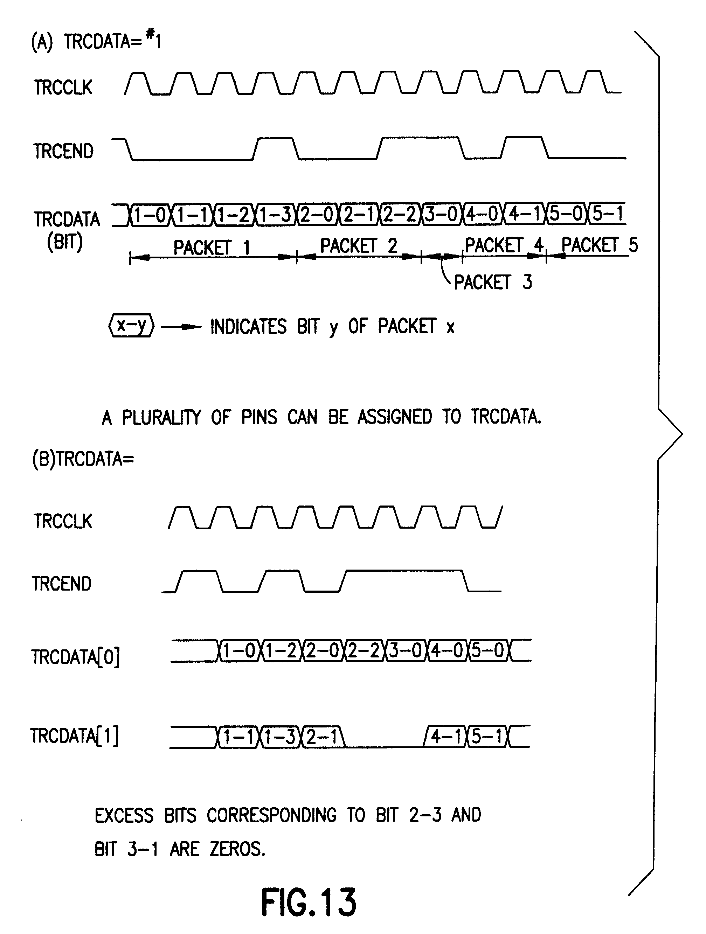

FIG. 13 shows the signals of the trace port.

| | | |
|---|---|---|
| TRCCLK | output | clock for trace output. |
| TRCEND | output | indicates end bit of trace data. |
| TRCDATA[n-1:0] | output | trace data output. |

Bigger "n" leads to less possibility of overflow. Bit length of each trace packet is variable. TRCEND signal indicates when the debug module finishes outputting a trace packet from TRCDATA pin. This means that there are always some packet on TRCDATA. It could be an empty packet named "NOP", when there is no any other trace data to be outputted.

As shown in FIG. 13B, two or more pins may be assigned to TRCDATA.

### <2.2. To minimize trace packet bit length>

The size of each trace packet should be as small as possible. Any bits that can be complemented somehow should be omitted. Since type of a packet can be judged by the first few bits and the end of a packet can be found by TRCEND, we can remove some of the trailing bits of each packet.

We use the following two methods because these are effective, yet simple and easy to implement.
a) suppress the trailing bits which are all zero.
b) suppress the trailing bits which have the same value as the previous packet.

We use (b) for TPC packets and (a) for other packets. (Packets are defined later.)

### Example of (a)

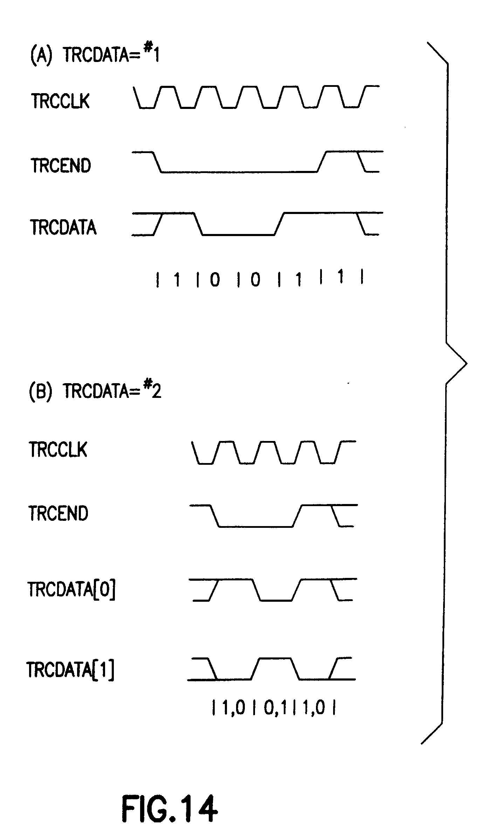

As shown in FIG. 14A, we can remove the last three bits of an 8 bit packet "1,0,0,1,1,0,0,0".

If TRCDATA is two bit, we can remove the last two bits only, as shown in FIG. 14B.

### Example of (b)

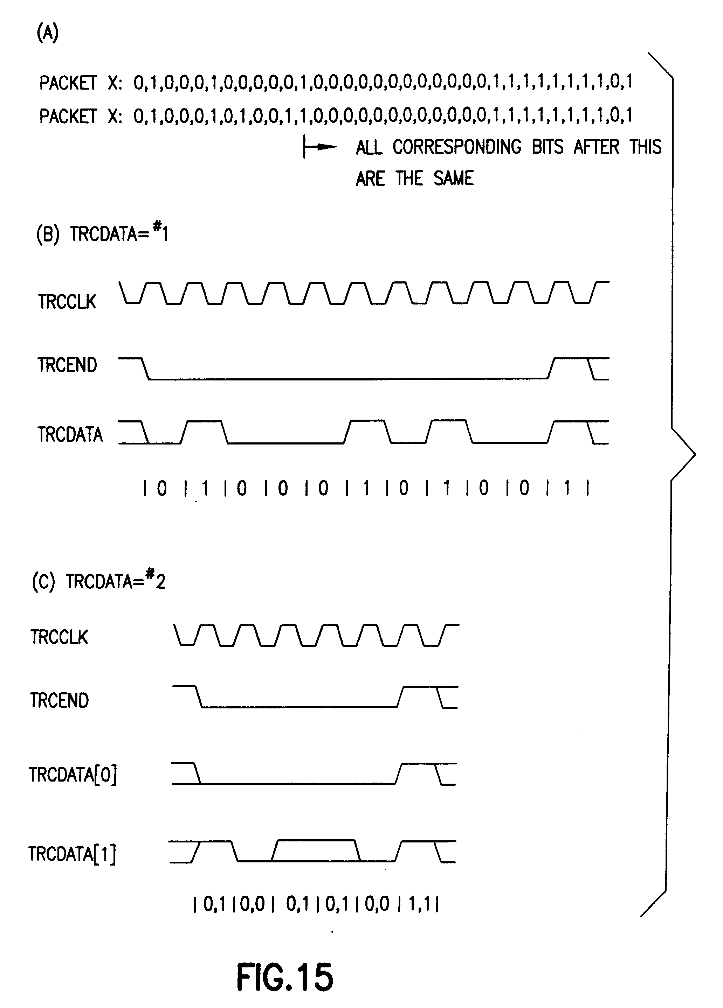

Suppose a 34 bit packet 'packet Y' is to be outputted and the previous packet of the same type is 'packet X' as shown in FIG. 15A, then the bits after the indicator do not need to be outputted.

Note that the last bit of TRCDATA[1] is "1" not "0".

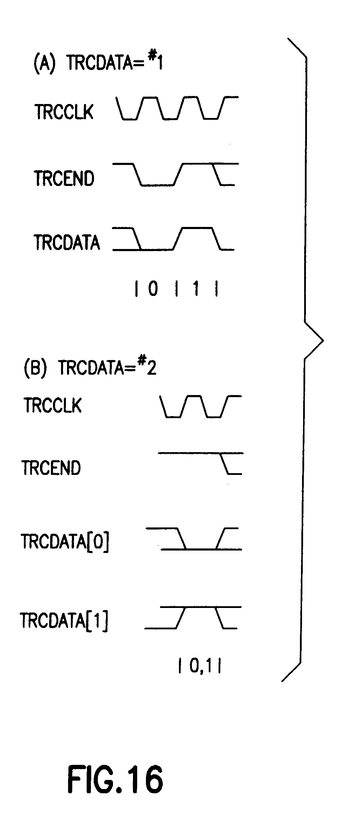

In this example, the first 4 bits (0,1,0,0) indicates the type of the packet. Even if a packet completely matches the previous packet of the same type (if 'packet X' is identical with 'packet Y'), the first four bits should be outputted. But, we can remove the last two bits of this packet by applying method (1) again. Finally we only need to output the first two bits, as shown in FIG. 16.

### <2.3. Trace packet definition>

| | |
|---|---|
| mnemonic | code |
| NSEQ <seq#> | 1,<seq#> |
| TPC <program_counter> | 0,1,0,0, <program_counter> |
| TPCM | 0,1,0,1 |
| EXP <exp_id> | 0,1,1,0, <exp_id> |
| LSEQ | 0,1,1,1 |
| MATCH <match_info> | 0,0,1,1, <match_info> |
| DATA <type>,<data> | 0,0,1,0, <type>,<data> |
| OVF | 0,0,0,1 |
| NOP | 0 |

[0175]

### <2.3.1 No-Sequential Execution>

| | |
|---|---|
| mnemonic | NSEQ <seq#> |
| code | 1,<seq#> |

This packet is outputted when a branch or an exception occurs.

<seq#> is program counter increment while instructions are sequentially executed from either the last occurrence of this event or LSEQ (Long Sequential Execution) packet to the current occurrence of this event. The unit of the <seq#> should be the minimum number of program counter increment. <seq#> is outputted from the least significant bit (LSB) in binary format. It is not necessary to output the higher bits which are zero.

### Examples:

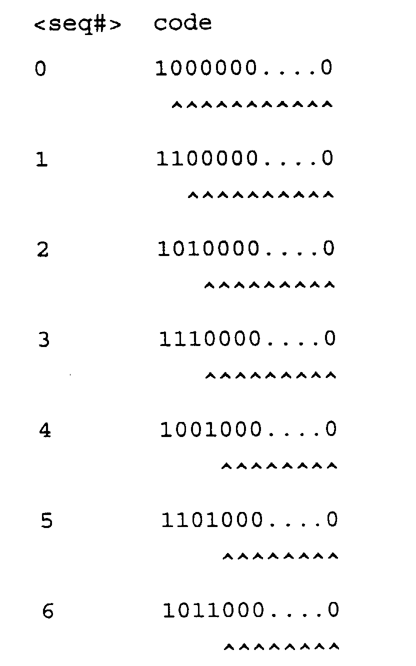

The bits marked with '^' don't need to be outputted.

Since this packet (and LSEQ packet) indicates the program counter distance between the target address of the previous branch and the source address of the current branch, the followings should be noted.
- When the processor skips an instruction but does not change the program flow, the skipped instruction should be counted. An example is a branch likely instruction of MIPS R3000 series processors that isn't taken.
- On the contrary, an instruction in a branch delay slot should not be counted. We can judge whether such instruction has been executed by inverse-assembling the branch instruction.

### <2.3.2 Target PC>

| | |
|---|---|
| mnemonic | TPC <program_counter> |
| code | 0,1,0,0,<program_counter> |

<program_counter> is outputted from the least significant bit (LSB) in binary format. Higher bits that are the same as the previous Target PC output don't need to be outputted. Any portion of the bits that are always fixed don't need to be outputted either. (For example, bit 1 and 0 of program counter for MIPS R3000 series processors.)

If the processor is equipped with an MMU (memory management unit), <program_counter> should be a logical address.

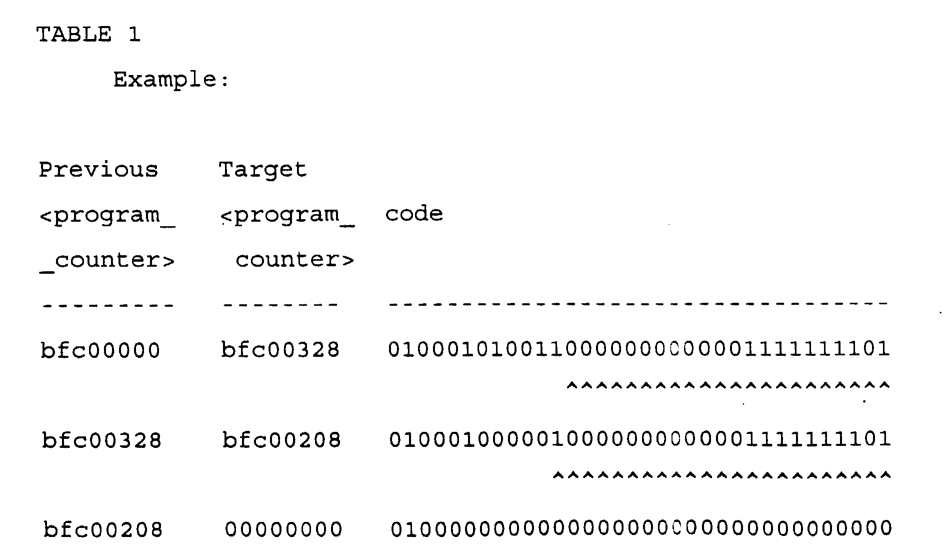

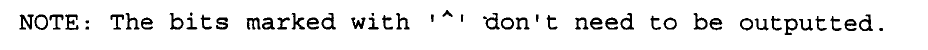

This packet is outputted at the following situations:
- When an indirect jump is taken, this packet should be outputted after NSEQ packet. The definition of indirect jump instruction here is an instruction that causes branch or jump, and the target address can not be decoded from its instruction code. For example, a register indirect jump (like 'jr $31' of MIPS R3000 series processor) or a return from subroutine (like 'rts' of Motorola CPU32 processor).
- When an exception or an event that causes no-sequential program counter change, this packet should be outputted after an EXP packet.
- When the internal N-trace buffer is empty at direct jump occurrence, this packet should be outputted. This is because inverse-assembling can only be initiated from a TPC packet. The states stored between the first line of the trace list and the first TPC packet in that trace list can not be inverse-assembled.

N-trace reset should clear (to zero) all the bits of the register where <program_counter> of the previous TPC packet is stored.

You should output meaningful values (not zero) for extra bits if you have multiple TRCDATA pins. For example, '0101000001' (not '0101000000') is outputted for the second branch in the above example code, if you have two TRCDATA pins.

### <2.3.3 Exception>

| | |
|---|---|
| mnemonic | EXP <exp_id> |
| code | 0,1,1,0,<exp_id> |

This packet is outputted when an exception or a special event occurs in the processor.

<exp_id> indicates the type of the exception or the event. Bit assignments of the <exp_id> is processor family dependent. <exp_id> is outputted from the least significant bit (LSB) in binary format. It is not necessary to output the higher bits which are all zero.

This packet is outputted after an NSEQ packet when the processor generates an exception. A TPC packet should be outputted after the EXP packet if the address of the exception handler is unknown from the <exp-id>. Examples of events can be an interrupt, a process ID change, a bus release, an entry to sleep mode and etc..

### <2.3.4 Trigger and/or hardware breakpoint match>

| | |
|---|---|
| mnemonic | MATCH <match_info> |
| code | 0,0,1,1,<match_info> |

This packet is outputted when a user specified event occurs such as an on-chip hardware breakpoint hit or an external trigger input.

Bit assignments of the <match_info> is processor family dependent. <match_info> should include information indicating a type of an event and the channel number (if the event is a hardware breakpoint) . In addition, <match_info> may include additional information that shcws the details of the event.

MATCH packets should not be lost even while the trace buffer is overflowed because MATCH packets are used to trigger a debug tool which captures N-trace packets.

The following is an example of <match_info>.

### <2.3.4.1 Example of <match_info>>

First 2 bits of <match_info> indicate a type of an event. The succeeding bits depend on these.

| <bptype> | types of events |
|---|---|
| 0,0 | External trigger input |
| 0,1 | Instruction address breakpoint |
| 1,0 | Data access breakpoint |
| 1,1 | reserved |

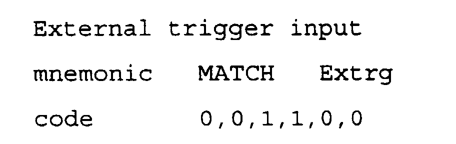

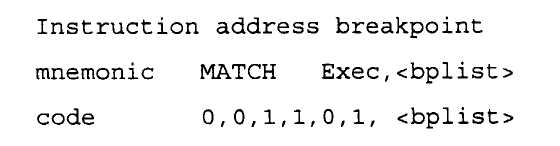

<bplist> indicates which channel in instruction address breakpoints has been hit. <bplist> has the same number of bits as the number of instruction address breakpoints. When channel 'n' of the breakpoints is hit, bit 'n' of the <bplist> is set. If two or more bits are set, it means that two or more conditions are met at the same time.

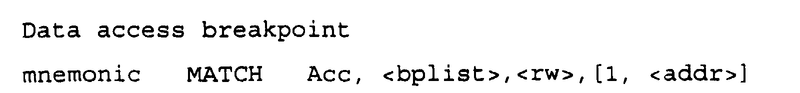

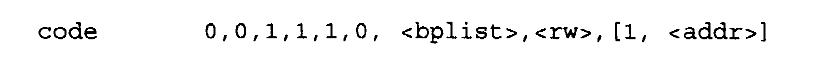

<bplist> indicates which channel in data access breakpoints has been hit. <bplist> has the same number of bits as the number of data access breakpoints. When channel 'n' of the breakpoints is hit, bit 'n' of the <bplist> is set. If two or more bits are set, it means that two or more conditions are met at the same time.

<rw> is 1 bit length and it indicates the access type of the access cycle.

| <rw> | |
|---|---|
| 1 | Read cycle |
| 0 | Write cycle |

When a data access breakpoint is set with an address mask, the address cannot be determined from the channel of the breakpoint. In this case, additional information, the address of the data access cycle (<addr>), is useful to determine the exact address. <addr> is outputted if an address output enable bit 'MAOE' of a data access breakpoint is set.

Generally, an address mask is used to mask lower bits of an address rather than the higher bits. To minimize the bit length of the packet, <addr> should be the address which are logically ANDed with the address mask.

### <addr> = <data access address> & <address mask register>

When bits of the <address mask register> are set, the comparator will not compare the corresponding <data access address> bits.

The complete address can be obtained by the value of the masked address and the breakpoint channel number.

When multiple data access breakpoints are hit and they are enabled to output address, the address mask of the lowest breakpoint channel number is used to mask the address.

A DATA packet may follow to indicate data used in the access cycle.

### <2.3.5 Data Access Output>

| | |
|---|---|
| mnemonic | DATA <type>,<data> |
| code | 0,0,1,0,<type>,<data> |

This packet is used to output data access cycles when the preset conditions are met.

<type> indicates what type of data will be outputted. The bit length and the meanings of the values are processor family dependent.

<data> is the data of the data access cycle. The bit length is variable.

A DATA packet should be outputted following a MATCH packet when a data access breakpoint is hit and its data output bit is enabled.

It is not necessary to output the higher bits which are zero.

The following is an example of <type> and <data>.

### <2.3.5.1 Example of <type> and <data>>

### <type>

<type> represents the processor's byte enable signals. In 32 bit processors, bit length of the <type> is 4 bits (BE[3:0]). <type> is outputted from the byte enable 0 (BE[0]).

### <data>

Bit length of the <data> depends on operation size of the data access cycle. For example, if it is a byte access cycle, the length will be 8 bit. <data> is outputted from the least significant bit (LSB) in binary format.

### <2.3.6 Overflow>

| | |
|---|---|
| mnemonic | OVF |
| code | 0,0,0,1 |

When the on-chip trace buffer is overflowed, inputs to the buffer are suspended until all the packets in the buffer is outputted. An OVF packet should follow the last packet left in the trace buffer.

If conditions of MATCH packet output are met while inputs are suspended due to an overflow, still the MATCH packets should be outputted after the OVF packet. Because MATCH packets are used to detect user specified events, they must not be lost. The other packets which occur during the overflow may be lost.

### <2.3.7 Long Sequential Execution>

| | |
|---|---|
| mnemonic | LSEQ |
| code | 0,1,1,1 |

This packet is prepared to limit the number of bits of the counter for the NSEQ code. This packet is outputted when the maximum number of the sequential instruction are executed. Such maximum number is not specified in this specification and can be dependent on the processor family.

### <2.3.8 No Data To Be Outputted>

| | |
|---|---|
| mnemonic | NOP |
| code | 0 |

This packet is outputted if there is no other packets to be outputted.

### <2.3.9 Smaller size packets>

The implementation of this N-trace specification naturally requires two sets of buffers. One is to store "types" of events. We call it "main buffer". The other is to store "data" such as <program_counter>, <exp_id>, <data> and etc. We call it "data buffer".

The bit width of "data buffer" will be longer than that of "main buffer". The depth of "data buffer" will be shallower than that of "main buffer". Thus, when "data buffer" is full, it is highly possible that "main buffer" is not full yet.

If that's the case, we can still output the "types" of events omitting "data" of the events.
EXP packet without <exp_id>
MATCH packet without <addr>
DATA packet without <data> and <type>

For TPC packets, we need to define another packet.

| | |
|---|---|
| mnemonic | TPCM |
| code | 0,1,0,1 |

### <2.4. Trace mode>

There should be various optional trace modes to make use of the limited trace pins and buffers most effectively.

### <2.4.1 Real-time/non-real-time trace>

In the real-time trace mode, the processor executes user program without any constraints from N-Trace. An OVF packet is generated when an on-chip N-Trace buffer overflows. In exceptional cases, some trace information that is necessary for a correct trace may be missed.

In the non-real-time trace mode, the processor's pipeline is stalled before an on-chip N-Trace buffer overflows. It assures the complete trace, but it will slow down the processor's user program execution.

### <2.4.2 TPC packets>

TPC packets should be selectively outputted depending on the type of branch. There are four levels for outputting TPC packets.

### Level 0: Suppress TPC

In this level, no TPC packets are outputted. It is useful if only data access trace is wanted.

### Level 1: TPC packets at exceptions and indirect jumps

TPC packets are output at occurrences of exceptions and indirect jumps. This is a normal mode. Very close to complete program flow trace.

### Level 2: TPC packets at special instructions

In this level, A TPC packet is always generated at the special instructions. This mode is especially useful if the special instruction are "inter-function" jumps. For example, Jump-and-link and Return instructions should be included in this category. It enables to trace program flow at function level (function call history etc.).

### Level 3: TPC packets at any exceptions and any jumps

A TPC packets is outputted at occurrences of any exceptions or any jumps. In this level, trace is always correct, since the inverse-assembling of the direct jump is not necessary for program counter reconstruction. In level 0-2, program counter can't be reconstructed if the program code is destroyed due to a system crash.

### <2.4.3 Other packets>

EXP, NSEQ, LSEQ packets should be selectively enabled or disabled. This corresponds to the level 3 or the level 0 of TPC packets.

### <2.5. Debug Registers>

Debug registers control N-trace settings. They are accessed by the N-wire "Resource Access" scheme. Accessing these registers should not affect the processor's user program execution.

### <2.5.1 N-trace system register>

TRCSYS debug register is used to control N-Trace.
TRCSYS (N-Trace System Register)
- ID: N-Trace Implementation ID (R) Identifies processor family dependent options.
- NDATAPIN: N-Trace Pin Configuration (R)Number of TRCDATA pins.
- OVF: N-Trace Overflow Status (R/W)

This bit is set when the trace buffer is overflowed.
- TGIN: N-Trace Trigger Input Status (R/W) This bit is set when an external trigger is detected.
- RESET: Reset N-Trace (W) Reset N-trace.

If the bit is set, N-trace is initialized and no trace packets are generated (NOP packets are outputted.) At N-trace reset, the trace buffer and MO1 (MATCH Packet Output Once) state are cleared. The value of the previous <program_counter> , which is used to shorten the next TPC packet, should be initialized. All the trace settings can be changed in N-trace reset.

When the bit is cleared, trace packets should be generated according to processor activities.
- CLKDIV: Trace clock frequency (W)

Changes TRCCLK frequency. These bits are used to accommodate the frequency to an N-trace analyzer. It would be selected from divisions of core clock frequency.

MODE Trace mode configuration (W)

| | |
|---|---|
| bit 0 | real-time or non-real-time trace. |
| bit 2,1 | selects TPC packet output level. |
| bit 3 | suppress EXP packets |
| bit 4 | suppress NSEQ, LSEQ packets |

### <2.5.2 Hardware breakpoint registers>

Debug registers for hardware breakpoints are used to specify conditions to output MATCH packets and DATA packets. The following registers should be prepared for each hardware breakpoint channel.

### <2.5.2.1 Instruction Address Breakpoint>

- IBA: Instruction Address Breakpoint Address Register
- IBAM: Instruction Address Breakpoint Address Mask Register
- IBC: Instruction Address Breakpoint Control Register

- INV: Comparator Inverse

Inverse the comparator result. Condition is met when an instruction address does not match the IBA and IBAM registers.
- ME: MATCH Packet Enable

Output a MATCH packet on N-trace, when the condition is met.
- MO1: MATCH Packet Output Once.

Output a MATCH packet once at the first occurrence of the condition since N-trace reset.

### <2.5.2.2 Data Access Breakpoint>

- DBA: Data Access Breakpoint Address Register
- DBAM: Data Access Breakpoint Address Mask Register
- DBD: Data Access Breakpoint Data Register
- DBDM: Data Access Breakpoint Data Mask Register
- DBC: Data Access Breakpoint Control Register

- AINV: Address Comparator Inverse

Inverse the address comparator result. Address condition is met when an access address does not match the DBA and DBAM registers.
- DINV: Data Comparator Inverse

Inverse the data comparator result. Data condition is met when an access data does not match the DBD and DBDM registers.
- DBE: Data Comparator Byte Enable

The bit length is equal to the number of bytes for the processor's data word. Each bit corresponds to the processor's byte enable.

When the bits are set, data condition is not met if the processor is not enabled the corresponding data bytes.
- MEA: MATCH Packet Enable at Address Match.

Output a MATCH packet on N-trace, when the address condition is met.
- MED: MATCH Packet Enable at Data Match.

Output a MATCH packet on N-trace, when the data condition is met.

If both the MEA bit and the MED bit are set, a MATCH packet is outputted when the both conditions are met. If the both are cleared, a MATCH packet is outputted regardless of the comparators' results.
- MERD: Read Access.

The condition is met at read cycles only.
- MEWR: Write Access.

The condition is met at write cycles only.

If both the MERD bit and the MEWR bit are set, a MATCH packet is outputted regardless of the access type. If the both are cleared, a MATCH packet is not outputted.
- MO1: MATCH Packet Output Once.

Output a MATCH packet once at the first occurrence of the condition since N-trace reset.
- MAOE: MATCH Packet Address Output Enable.

Add an access address information to a MATCH packet.

If the AINV bit is enabled, the <addr> should not be a value masked with the DBAM register. The <addr> should be just the access address.
- DEA: DATA Packet Enable at Address Match.

Output a DATA packet on N-trace, when the address condition is met.
- DED: DATA Packet Enable at Data Match.

Output a DATA packet on N-trace, when the data condition is met.

If both the DEA bit and the DED bit are set, a DATA packet is outputted when the both conditions are met. If the both are cleared, a DATA packet is outputted regardless of the comparators' results.
- DERD: Read Access.

The condition is met at read cycles only.
- DEWR: Write Access.

The condition is met at write cycles only.

If both the DERD bit and the DEWR bit are set, a DATA packet is outputted regardless of the access type. If the both are cleared, a DATA packet is not outputted.

### <2.6. Usage of trace packets>

### <2.6.1 Program counter flow trace>

NSEQ, LSEQ, TPC and EXP packets can be used to trace branch history. User can select a level of branch history from the following.
- branches from a function to another function (function flow)
- all branches (full program counter flow)

### <2.6.1.1 Function flow>

Function call history trace is achieved by capturing TPC and EXP packets. The TPC output mode should be set to level 2.

If a <program_counter> of a TPC packet is an entry address of a function, it indicates that the function is called. In addition, the caller can be determined by the previous TPC packet since the <program_counter> of the previous TPC packet is in the address range of the caller.

### <2.6.1.2 Full program counter flow>

Full program counter flow trace is achieved by capturing NSEQ, LSEQ, TPC and EXP packets. The TPC output mode should be set to level 1.

### Program counter reconstruction

We can reconstruct program counter by knowing where the branch is taken (location of the branch instruction) and where the branch targets to (target address). In this protocol, reconstructing the program counter can only start from a TPC state.

The following shows how program flow is reconstructed.
1) Search the first TPC packet.
2) Search NSEQ states toward the end of trace list If an NSEQ <seq#> packet is found, a jump or a branch was taken. The location of the jump or branch instruction can be known by adding the <seq#> to the previous target address.
3) If a TPC packet follows, the new target address can be known from this. Otherwise, the target address can be decoded by disassembling the jump or branch instruction.
4) Repeat (2) to (4).

### Examples of full program counter flow trace outputs

MIPS R3000 series processor is the target processor in this example.

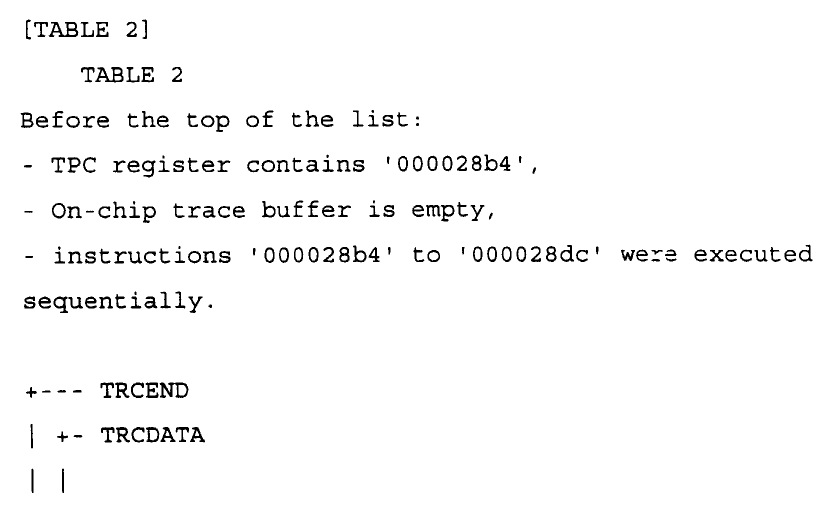

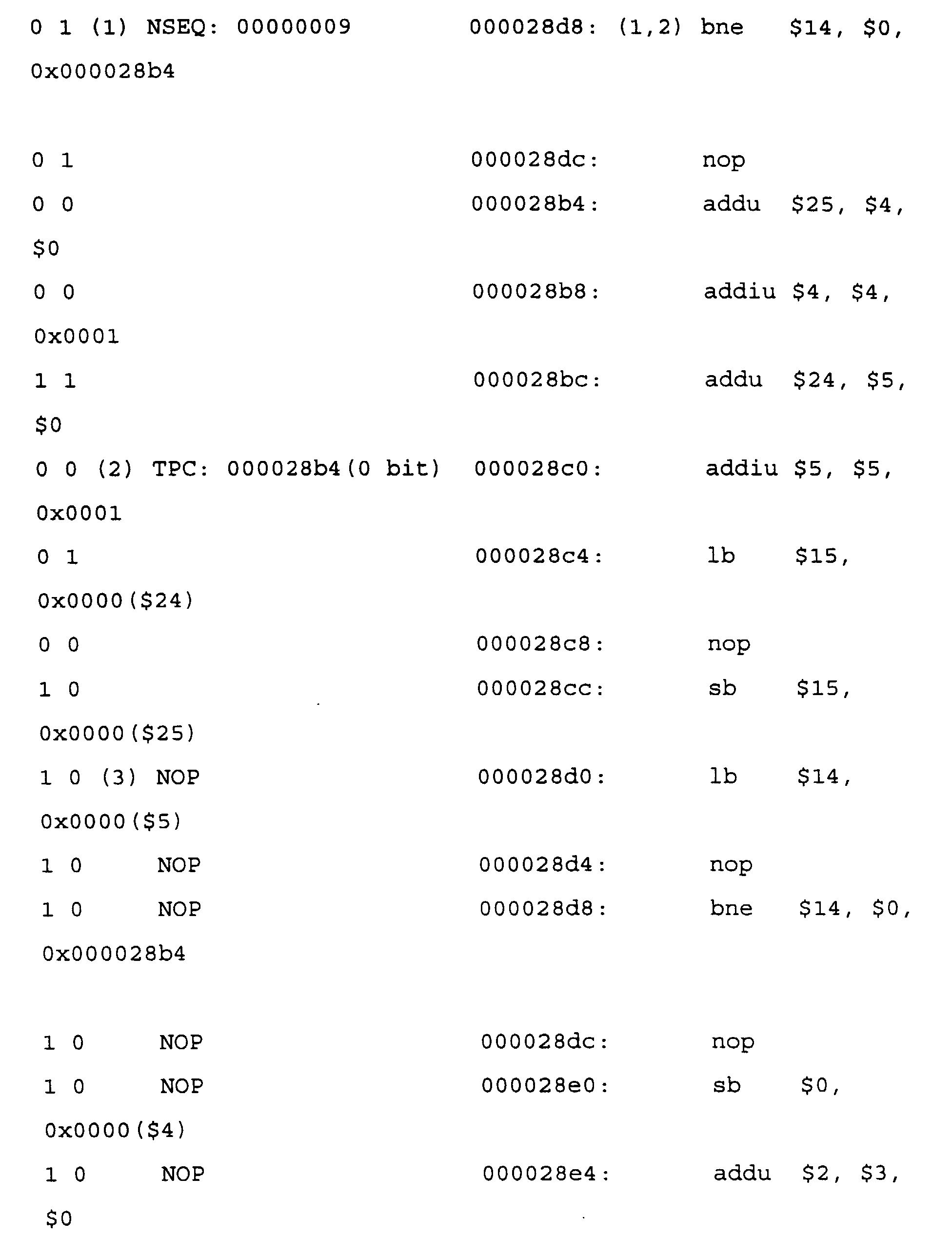

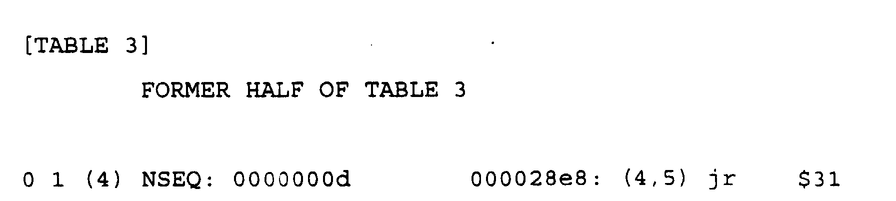

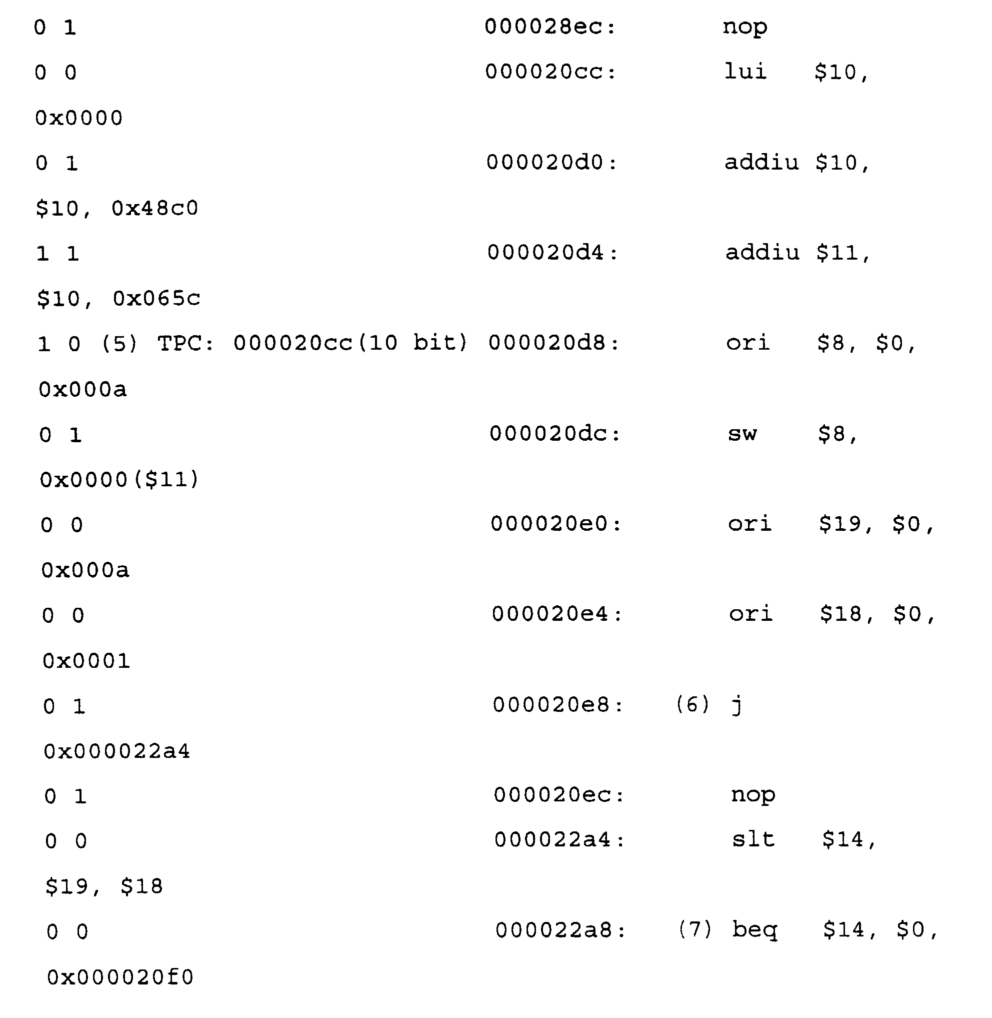

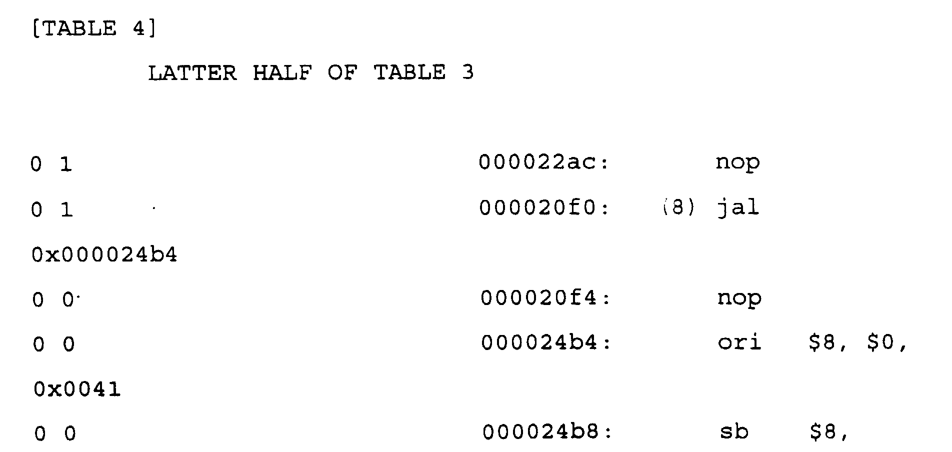

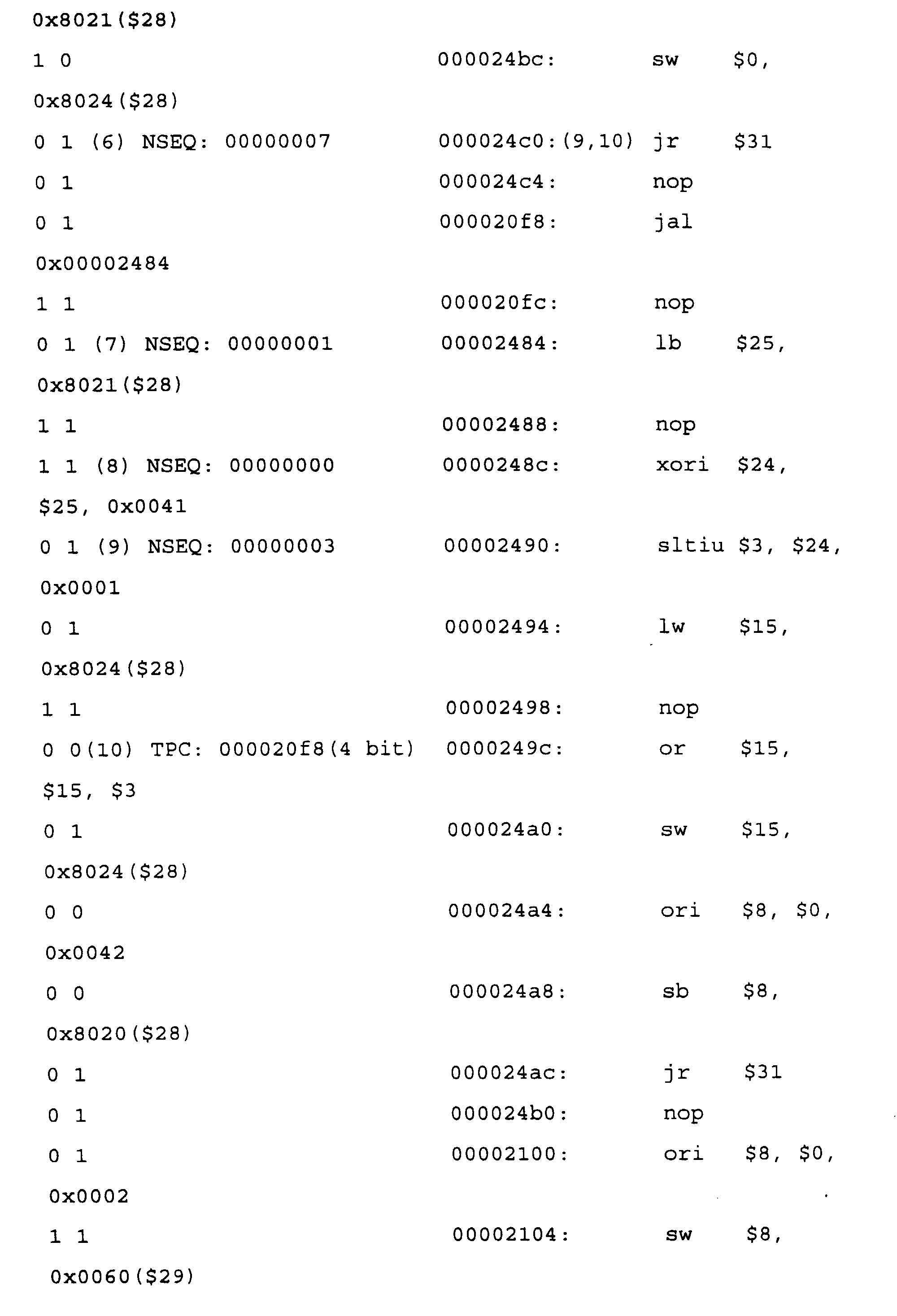

(1) Before the branch at the top of the list, 9 instructions (000028b4 thru 000028d4) were executed sequentially. (i.e. jumped from somewhere to 000028b4 and no branch were taken until here.) Therefore, 'NSEQ 9' code is outputted.
(2) The target address of the branch is outputted, since the on-chip trace buffer is empty. The target address is the same as it was, so only '0100' (no bits for program counter) are outputted.
(3) NOPs are output since the on-chip trace buffer becomes empty.
(4) The target address of the indirect jump is outputted.
(5) The lower 10 bits that were different from the previous TPC are output.
(6) Jump is taken during the TPC output by (5). The code 'NSEQ 7' output is delayed until the (5)'s output is completed.
(7) Branch is taken but the 'NSEQ 1' output is also delayed.
(8) Jump and Link is taken but the 'NSEQ 0' output is also delayed.
(9) Jump Register is taken but the 'NSEQ 3' output is also delayed.
(10) The TPC is outputted for Jump Register instruction even when the trace buffer is not empty because it is an indirect jump. This is the peak of buffer usage (4 packets are buffered) within this list.

### <2.6.2 Detecting user specified events>

MATCH packets are outputted when user specified events are detected.

### <2.6.2.1 Triggering N-trace analyzer at an event>

MATCH packet is used to trigger the N-trace analyzer which captures packets. The analyzer can capture processor activity around, before or after the particular event by detecting the MATCH packet. MO1 (output MATCH packet only at first occurrence of an event) should be enabled to ignore second and the later events.

### <2.6.2.2 Detecting occurrences of events>

Another usage of MATCH packet is to detect occurrences of events. Also, that can be used for the following purposes.
- mixed with program counter trace.
- access address.
- counting a number of events.
- measuring intervals of events.
Mixed with program counter flow trace

If MATCH packets are traced with program counter flow packets, the instruction address range where the processor caused the events can be determined. Precision of the address range depends on a branch history level (full program counter flow or function flow).

This is especially useful if a data access is used as an event. For example, when trace is taken with function flow, the preceding TPC packet shows the function which does the data access.

### Access address

When an address mask is used to specify a data access breakpoint, the masked address bits are unknown from the breakpoint channel number (<bplist>). As in the example of the MATCH packet specification, address (<addr>) can be added to MATCH packet at a data access. It is useful when the exact address has to be known.

### Counting a number of events

Specified events can be counted by counting MATCH packets.

### Measuring intervals of events

Intervals between one MATCH packet and another can be measured. Buffering causes time delay from the occurrence of the event to the corresponding MATCH packet. Other packets should be suppressed to make intervals more accurate because the delays would be minimal and fixed if no other packets are buffered.

### <2.6.3 Data access cycle trace>

MATCH and DATA packets can be used to trace processor data access cycles.

It is impossible to output all the data access cycles because the trace buffer depth and TRCDATA pin count are limited. To output data access cycles selectively, data access breakpoints are used.

In the example of the packet specification, MATCH packets are used to indicate occurrences of data access cycles, its access type and address. DATA packets are used to indicate the access size and data.

### <2.7. N-trace behavior in the debug mode>

When the processor is in the debug mode, trace packets should not be generated by any processor activities. NOP packets should continuously be outputted during the debug mode.

### <2.7.1 At transition to the debug mode>

A MATCH packet and a DATA packet should be outputted according to the packet enable bits, if the cause of the debug exception is an external trigger input or hardware breakpoint. When a debug exception occurs, an NSEQ packet and an EXP packet should be outputted. The other packets left in the trace buffer should be outputted before these NSEQ and EXP packets.

### <2.7.2 At transition to the normal mode>

When the processor leaves the debug mcde, a TPC packet should be generated to indicate the instruction address where the user program execution resumes.

### <2.7.3 For tool debugging>

To help developing the debug tool, it is better to have a special trace mode. In this mode, the trace packets should be outputted even in the debug mode. It is helpful in debugging a monitor program.

### EFFECT OF THE INVENTION

### USING PACKETS

By representing the processor status with packet of variable bit length, it became possible to display wider variety of information than conventional systems. For example, it becomes possible to not only detect the occurrence of an exception but also to display its cause, and to specify the met condition when a preset condition is met. Furthermore, because, when a branch or the like occurs, information on the number of instructions which have occurred up to that point is also included in the packet, it is not necessary to output processor statuses at the same frequency as the core clock as is the case in the prior atr, which allows the present invention to be applied to the processors which operate at high frequencies or issue two or more instructions in one clock cycle.

### REDUNDANT DATA REDUCTION

Outputting of redundant bit string is made unnecessary by quitting packet output halfway during the output. In addition, adopting a packet bit structure to make this efficient reduces the number of clocks necessary for packet output.

### NSEQ

Furthermore, because, as a method of obtaining the branch origin address in particular, the present invention provides a counter in the debugging module to accumulate the PC increments, and when a branch occurs it outputs the information that a branch occurred and the accumulated PC increment as a single packet, it is not necessary to indicate that a branch occurred and that an instruction was executed at each processor core clock.

This packet is expected to be the most frequently generated when tracing. Outputting the PC increment in binary starting with the lower significant bits makes it possible to output in a shorter number of clocks as branching incidence becomes higher. Furthermore, because it is not necessary for the bit string that indicates the packet type to be fixed, it is possible to define them so that the higher the incidence of a packet the shorter the length of its bit string.

### PACKET SELECTION

By providing a mode for suppressing packet output by packet type it becomes possible to not output packets not needed for tracing.

### FUNCTION LEVEL TRACE

By providing a mode for outputting TPC packets generated by branches other than branch instructions used in intra-module branches it becomes possible to minimize the packets for tracing program sequence when tracing program sequence at the module level.

### EFFICIENT PIN ARRANGEMENT, FREE PIN COUNT

The arrangement described above makes it possible to perform the same amount of tracing with fewer pins than in conventional examples. Doing so means that [the present invention] can be used for data access tracing or tracing to detect that a preset condition is met in a reduced number of clocks, and makes it possible to perform tracing at faster operating frequencies and with fewer pins. And it becomes possible for the user to select the optimum number of data output lines, taking into consideration the core clock and trace output clock frequency ratio and variations in each processor status which is to be displayed in relation to processor architecture and the number of pins which can be assigned to the user's application and trace output.

### PROCESSOR-INDEPENDENT OUTPUT FORMAT

By providing packet definitions and pin structure that are as independent as possible of processor architecture it becomes possible to reduce the man-hours required for debugging tool development and also to share debugging tools.

### STATUS OUTPUT LINE

Using the status output line it is easy to halt output immediately after detection of the condition that the debugging module can stop outputting in midstream. And the debugging tools can easily record output bit strings in each packet. Doing so makes it possible to compare a packet to preset conditions immediately before recording it in trace memory at the debugging tool side and provide a trigger for selectively recording packets.

### DATA ACCESS ADDRESS MASK

When detecting access to a preset address, it is possible to detect access to the preset address and also to know the accessed address, even if the preset address was masked, by outputting the accessed address with a MATCH packet. And it is possible to reduce the number of clocks needed for packet output, when lower significant bits are masked for detecting access to a specific address block or the like, by outputting this address from lower significant bits and outputting the bits that have not been masked as zero.

### DATA TRACE

When detecting access to a preset address, it is not necessary to output the bits that have not been masked when outputting an address in order to specify the masked bits when a condition is met and the address has a mask function. When access to a preset address is detected, outputting the accessed data makes it possible to trace the accessed data without rewriting the program contents during debugging and . without interfering with program execution.

## Claims

1. In a microprocessor which can output trace information, a method for outputting trace information of a microprocessor wherein said trace information is output as a packet composed of a variable-length bit string.

2. The method for outputting trace information of a microprocessor as set forth in Claim 1, wherein said bit string is output via:
one or a plurality of data output lines for bit string output,
one status output signal delimiting a packet, and
one clock line for providing a reference of serial output.

3. The method for outputting trace information of a microprocessor as set forth in Claim 1, wherein, in response to a change in program flow due to a branch/exception/interrupt, etc., a packet is output which contains a program counter increment from the first address after the immediately preceding program flow change until immediately before the occurrence of the current program flow change.

4. The method for outputting trace information of a microprocessor as set forth in Claim 3, wherein a packet is output indicating that the program counter increment exceeded a predetermined value each time the program counter increment from the first address after the immediately preceding program flow change until the occurrence of the next program flow change exceeds said predetermined value, and
said packet output in response to the occurrence of the next program flow change includes the residue of said program counter increment divided by said predetermined value.

5. The method for outputting trace information of a microprocessor as set forth in Claim 1, wherein, in response to the occurrence of a change in program flow, a packet is output which indicates the first address after a change in said program flow.

6. The method for outputting trace information of a microprocessor as set forth in Claim 1, wherein, in response to the occurrence of a change in program flow, a packet is output which indicates that a change occurred in said program flow and which indicates the cause of the change in said program flow.

7. The method for outputting trace information of a microprocessor as set forth in Claim 1, wherein a packet is output which, in response to any of the following conditions being met: a trigger has been reported via an external input terminal, execution of an instruction has been detected which matches a preset address, or data access has been detected which matches a preset address or data or both, indicates that said condition has been met and which condition has been met.

8. The method for outputting trace information of a microprocessor as set forth in Claim 1, wherein, when data access has been detected which matches a preset address or data or both, a packet is output which indicates the accessed data value.

9. The method for outputting trace information of a microprocessor as set forth in Claim 1, wherein, when a new packet has been generated while a previously generated packet is being output, a packet is output which indicate that said new packet has been lost in response that said new packet cannot be kept until output of said previously generated packet is completed.

10. The method for outputting trace information of a microprocessor as set forth in Claim 7, wherein, when a word at a preset address is masked and the word is output in order to identify the masked bits when a condition is met, a packet is output in which output of the bits that are not masked may be omitted.

11. The method for outputting trace information of a microprocessor as set forth in Claim 1, wherein output of a current packet may be quitted halfway to start output of the next packet in response that, during outputting said current packet, the remaining bit string to be output of said current packet has a predetermined specific value.

12. The method for outputting trace information of a microprocessor as set forth in Claim 1, wherein output of a current packet may be quitted halfway to start output of the next packet if, during outputting said current packet, the remaining bit string to be output of said current packet has the same value of the corresponding bit string of the immediately previous packet.

13. A method for outputting trace information of a microprocessor comprising the steps of
storing packet identification information in a output packet which information indicates a packet type of said packet,
storing in the portion of said packet which portion is to be output after said packet identification information a bit string whose output can be quitted halfway in the part output after said packet identification information in said packet, and
determining which trace information output method of Claim 11 or Claim 12 to use, based on said packet identification information.

14. The method for outputting trace information of a microprocessor as set forth in Claim 5, wherein output of the packet indicating said first address is not performed if the instruction which caused said program flow change is a branch instruction of the type which is used only in branches within a program module.
